(19) Europäisches Patentamt / European Patent Office / Office européen des brevets

(11) **EP 4 257 714 A1**

(12) **EUROPEAN PATENT APPLICATION**
published in accordance with Art. 153(4) EPC

(43) Date of publication:
**11.10.2023 Bulletin 2023/41**

(21) Application number: **21900663.2**

(22) Date of filing: **02.12.2021**

(51) International Patent Classification (IPC):
$C22C\ 11/06^{(2006.01)}$  $C22C\ 13/00^{(2006.01)}$
$C22C\ 21/00^{(2006.01)}$  $C22C\ 21/06^{(2006.01)}$
$C22F\ 1/00^{(2006.01)}$  $C22F\ 1/04^{(2006.01)}$
$C22F\ 1/12^{(2006.01)}$  $C22F\ 1/16^{(2006.01)}$
$H01M\ 4/134^{(2010.01)}$  $H01M\ 4/38^{(2006.01)}$
$H01M\ 4/46^{(2006.01)}$  $H01M\ 4/66^{(2006.01)}$
$H01M\ 10/052^{(2010.01)}$  $H01M\ 10/44^{(2006.01)}$

(52) Cooperative Patent Classification (CPC):
C22C 11/06; C22C 13/00; C22C 21/00;
C22C 21/06; C22F 1/00; C22F 1/04; C22F 1/12;
C22F 1/16; H01M 4/134; H01M 4/38; H01M 4/46;
H01M 4/66; H01M 10/052; H01M 10/44;
Y02E 60/10

(86) International application number:
**PCT/JP2021/044228**

(87) International publication number:
**WO 2022/118912 (09.06.2022 Gazette 2022/23)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **02.12.2020 JP 2020200607**

(71) Applicants:
• **SUMITOMO CHEMICAL COMPANY, LIMITED**
**Tokyo 103-6020 (JP)**
• **Tohoku University**
**Sendai-shi, Miyagi 980-8577 (JP)**

(72) Inventors:
• **YAMAGUCHI, Takitaro**
**Tsukuba-shi, Ibaraki 300-3294 (JP)**
• **MATSUMOTO, Shingo**
**Tsukuba-shi, Ibaraki 300-3294 (JP)**
• **ICHITSUBO, Tetsu**
**Sendai-shi, Miyagi 980-8577 (JP)**
• **LI, Hongyi**
**Sendai-shi, Miyagi 980-8577 (JP)**

(74) Representative: **Vossius & Partner
Patentanwälte Rechtsanwälte mbB
Siebertstraße 3
81675 München (DE)**

(54) **METAL NEGATIVE ELECTRODE, LITHIUM SECONDARY CELL, BATTERY SYSTEM, AND PRODUCTION METHOD FOR METAL NEGATIVE ELECTRODE**

(57)    A metal anode is provided, including: an active layer formed of lithium and a base material in which the lithium is solid-dissolved; and a base material layer formed of the base material, in which the metal anode has a plate shape including a first surface and a second surface facing each other, the active layer is present on a side of the first surface, the base material layer is present on a side of the second surface, the active layer and the base material layer are laminated in contact with each other, the base material includes one or more metals selected from the group consisting of Al, Si, Sn, and Pb, and the base material layer has a standard deviation of length, which is from the second surface to the active layer, of 0 or greater and 10 or less.

FIG. 1

EP 4 257 714 A1

**Description**

[Technical Field]

The present invention relates to a metal anode, a lithium secondary cell, a battery system, and a production method for metal anode. Priority is claimed on Japanese Patent Application No. 2020-200607, filed December 2, 2020, the content of which is incorporated herein by reference.

[Background Art]

Conventionally, as for an anode constituting a lithium secondary cell, studies have been made to improve cell performance using a material having a larger theoretical capacity than graphite, which is a conventional anode material. As such a material, a metallic material capable of absorbing and releasing lithium ions like graphite is attracting attention. In the following description, an anode formed of a metallic material may be referred to as a "metal anode".

For example, Patent Document 1 discloses a nonaqueous electrolyte cell that uses a cladding material for joining a base layer unalloyable with lithium with an aluminum layer forming an alloy with lithium as a metal anode.

[Citation List]

[Patent Document]

[Patent Document 1]
Japanese Unexamined Patent Application, First Publication No. 2017-195028

[Summary of Invention]

[Technical Problem]

As application fields of lithium secondary cells expand, further improvement of cycle characteristics is required. Lithium secondary cells using a metal anode have room for improvement in cycle characteristics. Further, not only in a lithium secondary cell but also in a battery system including a battery cell of the lithium secondary cell, improvement in cycle characteristics is similarly required. Moreover, in the field of lithium secondary cells, competition for cost reduction is fierce, and there has been a demand not to use a cladding material, which is one of the factors increasing costs.

The term "cycle characteristics" refers to a discharge capacity retention rate upon repeatedly charging and discharging. A high discharge capacity retention rate when the secondary cell is repeatedly charged and discharged is evaluated as "good cycle characteristics".

The present invention has been made in view of such circumstances, and an object of the present invention is to provide a metal anode having good cycle characteristics without using a cladding material, a lithium secondary cell, and a battery system. Another object of the present invention is to provide a production method for a metal anode capable of easily producing a metal anode having good cycle characteristics without using a cladding material.

[Solution to Problem]

In order to solve the above problems, an aspect of the present invention includes the following aspects.

[1] A metal anode, including: an active layer formed of lithium and a base material in which the lithium is solid-dissolved; and a base material layer formed of the base material, in which the metal anode has a plate shape including a first surface and a second surface facing each other, the active layer is present on a side of the first surface, the base material layer is present on a side of the second surface, the active layer and the base material layer are laminated in contact with each other, the base material includes one or more metals selected from the group consisting of Al, Si, Sn, and Pb, and the base material layer has a standard deviation of length, which is from the second surface to the active layer, of 0 or greater and 10 or less.

[2] A metal anode, including: a first active layer formed of lithium and a base material in which the lithium is solid-dissolved; a second active layer formed of the lithium and the base material; and a base material layer formed of the base material, in which the metal anode has a plate shape including a first surface and a second surface facing each other, the first active layer is present on a side of the first surface, the second active layer is present on a side of the second surface, the base material layer is located between the first active layer and the second active layer,

the first active layer and the base material layer are laminated in contact with each other, the second active layer and the base material layer are laminated in contact with each other, the base material includes one or more metals selected from the group consisting of Al, Si, Sn, and Pb, and the base material layer has a standard deviation of length, which is from an interface between the first active layer and the base material layer to an interface between the second active layer and the base material layer, of 0 or greater and 10 or less.

[3] The metal anode according to [1] or [2], in which the base material is aluminum or an aluminum-containing metal.

[4] The metal anode according to [3], in which in the aluminum-containing metal, a non-aluminum metal phase is dispersed in an aluminum metal phase.

[5] The metal anode according to any one [1] to [4], in which a Vickers hardness of the base material layer is 10 HV or greater and 70 HV or less.

[6] The metal anode according to any one of [1] to [5], in which the base material layer has an average corrosion rate of 0.2 mm/year or less as measured by an immersion test under the following immersion conditions,

[Immersion Conditions]
Immersion solution: 3.5% NaCl aqueous solution of which pH is adjusted to 3 using acetic acid as a pH-adjusting agent
Immersion temperature: 30°C
Immersion time: 72 hours.

[7] The metal anode according to any one of [1] to [6], in which the metal anode is formed of a rolled material, and in a cumulative frequency distribution curve of an absolute value of an angle that is formed by a rolled surface of the base material layer and a normal line of a {111} plane of a metal crystal included in the base material, which is obtained by measuring a surface of the base material layer by an electron backscattered diffraction method, an angle at which a cumulative frequency from a low angle side is 50% or greater is 20° or less when a total is 100%.

[8] A lithium secondary cell, including: the metal anode according to any one of [1] to [7], configured to absorb and release lithium ions; a cathode configured to absorb and release lithium ions; and an electrolyte disposed between the metal anode and the cathode.

[9] A battery system, including: a lithium secondary cell unit; and a control unit, in which the lithium secondary cell unit includes: the metal anode according to any one of [1] to [7], configured to absorb and release lithium ions; a cathode configured to absorb and release lithium ions; and an electrolyte disposed between the metal anode and the cathode, and the control unit controls a charging current density of the metal anode at a constant current of 0.6 mA/cm$^2$ or greater and 30 mA/cm$^2$ or less.

[10] The battery system according to [9], in which the control unit controls the charging current density to 0.6 mA/cm$^2$ or greater and 15 mA/cm$^2$ or less.

[11] The battery system according to [9] or [10], in which the control unit controls a current density of the metal anode during constant voltage charging to 0.6 mA/cm$^2$ or greater.

[12] A production method for a metal anode, including: charging an anode body at a constant current in a state where an electrolyte is disposed between the anode body and a cathode facing the anode body, in which the anode body has a plate shape including a first surface and a second surface facing each other, in which the first surface faces the cathode, and includes one or more metals selected from the group consisting of Al, Si, Sn, and Pb, and in the charging, a charging current density of the anode body is controlled to 0.6 mA/cm$^2$ or greater and 30 mA/cm$^2$ or less.

[13] A production method for a metal anode, including: charging an anode body at a constant current-constant voltage in a state where an electrolyte is disposed between the anode body and a cathode facing the anode body, in which the anode body has a plate shape including a first surface and a second surface facing each other, in which the first surface faces the cathode, and includes one or more metals selected from the group consisting of Al, Si, Sn, and Pb, and in the charging, a current density of the anode body during constant voltage charging is controlled to 0.6 mA/cm$^2$ or greater.

[Advantageous Effects of Invention]

According to the present invention, it is possible to provide a metal anode having good cycle characteristics without using a cladding material, a lithium secondary cell, and a battery system. In addition, it is possible to provide a production method for a metal anode capable of easily producing a metal anode having good cycle characteristics without using a cladding material.

[Brief Description of Drawings]

FIG. 1 is a schematic sectional view showing an example of a metal anode 1 according to a first embodiment.

FIG. 2 is an explanatory view showing a method for obtaining a standard deviation of length La.

FIG. 3 is a schematic view showing an anode in which the standard deviation of length La does not satisfy a requirement.

FIG. 4 is a schematic view showing a production method of the anode 1.

FIG. 5 is a schematic sectional view explaining a state when an anode body is charged.

FIG. 6 is a schematic sectional view explaining a state when the anode body is charged.

FIG. 7 is a schematic sectional view showing an example of a metal anode 2 according to a second embodiment.

FIG. 8 is an explanatory view showing a method for obtaining a standard deviation of length Lb.

FIG. 9 is a schematic view showing a production method of the anode 2.

FIG. 10 is a schematic view showing an example of a lithium secondary cell according to a third embodiment.

FIG. 11 is a schematic view showing a battery system according to a fourth embodiment.

FIG. 12 is an electromicroscopic photograph showing a cross section of an anode in Example 1.

FIG. 13 is an electromicroscopic photograph showing a cross section of an anode in Example 2.

FIG. 14 is an electromicroscopic photograph showing a cross section of an anode in Comparative Example 1.

[Description of Embodiments]

[First Embodiment]

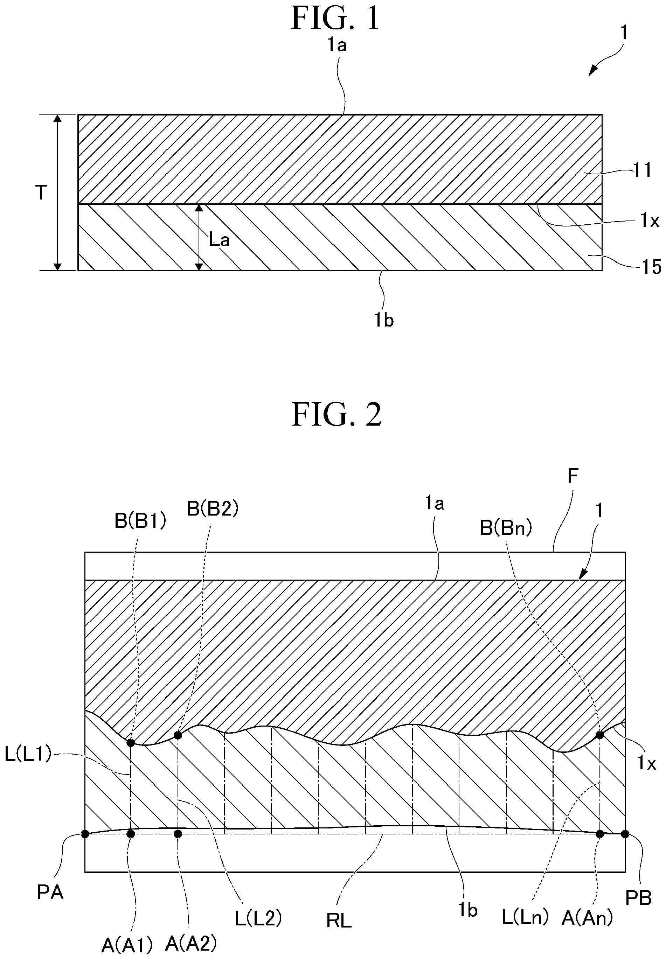

Hereinafter, a metal anode and a production method for a metal anode according to a first embodiment of the present invention will be described with reference to FIGS. 1 to 6. In all of the following drawings, in order to make it easy to see the drawings, dimension, scale, and the like of each of the components have been modified as appropriate.

(Metal Anode)

FIG. 1 is a schematic sectional view showing an example of a metal anode 1 according to the present embodiment. In the following description, a metal anode 1 may be simply abbreviated as a "anode 1".

The anode 1 is a plate-shaped member. In the present embodiment, "plate shape(plate-shaped)" means a three-dimensional shape having at least two facing planes. The "two facing planes" correspond to the "first surface" and the "second surface" in the present invention.

In the "plate-shaped" anode 1, an interval between a first surface 1a and a second surface 1b corresponds to a thickness T of the anode 1. That is, a surface opposite to the first surface 1a in a thickness direction of the anode 1 is the second surface 1b. Various values can be adopted for the thickness T of the anode 1. The plate-shaped anode 1 may be an electrode having a thickness that is easy to curve or bend, or an electrode having a thickness that is difficult to curve or bend.

The thickness T of the anode 1 is preferably 5 $\mu$m or greater, more preferably 6 $\mu$m or greater, still more preferably 7 $\mu$m or greater, and particularly preferably 25 $\mu$m or greater. In addition, the thickness T of the anode is preferably 200 $\mu$m or less, more preferably 190 $\mu$m or less, still more preferably 180 $\mu$m or less, and particularly preferably 100 $\mu$m or less.

The upper limit value and lower limit value of the thickness of the anode 1 can be randomly combined together.

The thickness T of the anode 1 is preferably 5 $\mu$m or greater and 200 $\mu$m or less, more preferably 6 $\mu$m or greater and 190 $\mu$m or less, still more preferably 7 $\mu$m or greater and 180 $\mu$m or less, and particularly preferably 25 $\mu$m or greater and 100 $\mu$m or less.

The thickness T of the anode 1 may be measured using a thickness gauge or a caliper. The thickness T of the anode 1 means an average value when the thickness of the anode 1 is measured at five points. The five measurement points for measuring the thickness are the five points of the center of the anode 1 and the center of each region when the anode 1 is divided into four regions having substantially the same area in plan view. The dividing line when the anode 1 is divided into four regions is a straight line, and overlaps the center of the anode 1.

The thickness T of the anode 1 described above refers to the thickness of the anode 1 during discharge.

The anode 1 preferably has a smaller variation in measurement value of the thickness, which is obtained by measuring at five points by the above-described method. The minimum measurement value of the thickness is preferably 95% or greater of the thickness T. In addition, the maximum measurement value of the thickness is preferably 105% or less of the thickness T. In such an anode 1, the first surface 1a is parallel to or is substantially parallel to the second surface 1b.

The anode 1 is composed of lithium and a base material in which lithium is solid-dissolved. Specifically, the anode 1 includes an active layer 11 that is present on a side of the first surface 1a and formed of lithium and the base material, and a base material layer 15 that is present on a side of the second surface 1b and formed of the base material. The active layer 11 and the base material layer 15 are laminated in contact with each other. The active layer 11 and the base material layer 15 form an interface 1x at a contact position.

The active layer 11 functions as an anode active material. The base material layer 15 functions as a current collector. That is, the anode 1 is a current collector integrated anode serving as the anode active material and the current collector. Therefore, the anode 1 does not require the current collector as a separate member.

When the anode active material is supported on the current collector of the separate member to produce the anode, the anode active material may be peeled off from the current collector and the anode may be damaged due to charging and discharging. On the other hand, the anode 1 has an advantage in that the problem of peeling off of the anode active material is unlikely to occur in the first place because the current collector and the anode active material are one member.

<Active Layer>

The active layer 11 is an interstitial solid solution layer in which lithium enters between atoms of the base material in a charged state, and is a porous layer. In addition, the active layer 11 releases lithium solid-dissolved in the base material in a discharged state and approaches the base material. That is, the active layer 11 functions as an anode active material.

The base material contains a metallic material capable of absorbing and releasing lithium ions. The base material contains one or more metals selected from the group consisting of Al, Si, Sn and Pb. The details of the base material will be provided in the description of the base material layer 15 to be described later.

<Base Material Layer>

The base material layer 15 is formed of the base material described above, and a metal composition does not change in both the charged state and the discharged state. In addition, the base material layer 15 is continuously and integrally formed with the active layer 11, and is conductive with the active layer 11. That is, the base material layer 15 functions as a current collector.

The base material layer 15 has a standard deviation of length La, which is from the second surface 1b to the active layer 11, of 0 or greater and 10 or less. The standard deviation of length La is ideally 0, but may be 1 or greater, 1.5 or greater, or 2 or greater. In addition, the standard deviation of length La may be 8 or less, 7 or less, or 6 or less.

The upper limit value and lower limit value of the standard deviation can be randomly combined together. For example, the standard deviation may be 1 or greater and 8 or less, 1.5 or greater and 7 or less, or 2 or greater and 6 or less.

As for the "length La from the second surface 1b to the active layer 11", a length from the "second surface 1b" to the "interface 1x between the active layer 11 and the base material layer 15" is adopted. The "standard deviation of length La" is obtained as follows.

(Method for Calculating Standard Deviation of Length La)

First, the anode 1 is processed inside a glove box that is controlled to have a moisture value of 1 ppm or less using the following focused ion beam processing apparatus to prepare a cross section of the anode 1. Next, a scanning electron microscope image (SEM image) of the obtained cross section is obtained under the following conditions with the following scanning electron microscope (SEM). The imaging range includes the first surface 1a and the second surface 1b.

· Cross Section Preparation Conditions

Focused ion beam processing observation apparatus: FB-2100 (manufactured by Hitachi High-Technologies Corporation)
Ion source: gallium liquid metal
Acceleration voltage: 40 kV

· Measurement Conditions

Scanning electron microscope: field-emission scanning electron microscope (model number: SU-8230, manufactured by Hitachi High-Technologies Corporation)
Acceleration voltage: 1 kV (during observation), 10 kV (during EDX)
Magnification: x600

The length La is measured from the obtained SEM image, and the standard deviation of length La is obtained.
FIG. 2 is an explanatory view showing a method for obtaining the standard deviation of length La. FIG. 2 is a schematic view of the SEM image of the anode 1 captured under the above-described conditions. In FIG. 2, reference sign F denotes an outer frame of a field of view of the SEM image.
When obtaining the standard deviation of the "length from the second surface 1b to the interface 1x", first, a reference on a side of the second surface 1b is set. In the SEM image, a virtual line connecting a first intersection point PA between the second surface 1b of the anode 1 and the outer frame F and a second intersection point PB between the second surface 1b of the anode 1 and the outer frame F is set. The virtual line refers to a reference line RL on the side of the second surface 1b.
Next, in the reference line RL on the SEM image, a plurality of reference points A (A1, A2, ..., and An) from the intersection point PA to the intersection point PB are set. A distance between the adjacent reference points A is 15 $\mu$m in actual size. A perpendicular line is extended from each reference point A toward a line corresponding to the interface 1x on an SEM photograph to set an intersection point B (B1, B2, ..., or Bn) between the perpendicular line and the interface 1x. A length of a line segment L (L1, L2, ..., or Ln) connecting each reference point A and the intersection point B is obtained.
The same operation is performed on each of the SEM images of the five fields of view, and the length La of a plurality of line segments L is obtained in each field of view.
A standard deviation is calculated for a measurement value (length La) of the obtained plurality of line segments L, and the target standard deviation of length La is obtained.
In the SEM image, the base material layer appears solid and the active layer appears porous. Therefore, a difference between the appearance between the base material layer and the active layer is obvious, so that those skilled in the art can easily determine the difference.
Moreover, when a void is formed in the base material layer, the interface between the base material layer and the void formed in the base material layer is also exposed to a cross section of the anode, in addition to the interface between the base material layer and the active layer. In this case, the difference between the "interface between the base material layer and the active layer" and the "interface between the base material layer and the void formed in the base material layer" may become unclear.
Therefore, when a plurality of intersection points are formed between the perpendicular line extending from the reference point A and the interface with the base material layer, an intersection point that is farthest from the reference point A is defined as an intersection point B, and the length of the line segment L is obtained.
The anode 1 having a standard deviation of length La in the relationship described above has a smaller variation in length from the first surface 1a to the interface 1x compared to an anode having a standard deviation of length La that does not satisfy the above-described requirement. Therefore, during discharging of the lithium secondary cell using the anode 1, deintercalation of lithium ions can be expected to occur without deviation from the first surface 1a. Similarly, during charging of the lithium secondary cell using the anode 1, intercalation of lithium ions can be expected to occur without deviation from the first surface 1a. Therefore, the anode 1 is less likely to be distorted during charging and discharging, and damage is suppressed, so that improvement in cycle characteristics can be expected.

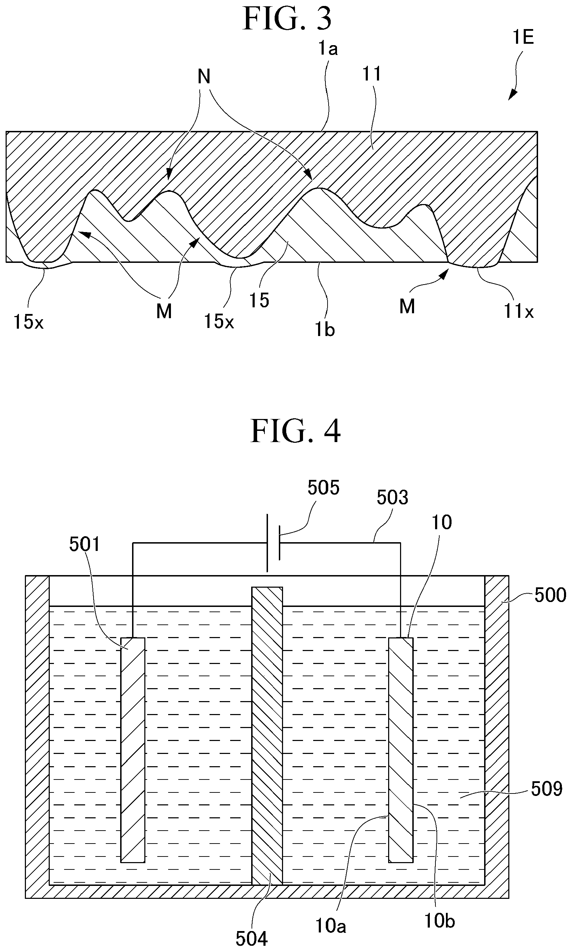

FIG. 3 is a schematic view showing an anode in which the standard deviation of length La does not satisfy the above-described requirement. Such an anode 1E has a large variation between a portion where lithium ions enter deeply from the first surface 1a to the side of the second surface 1b (indicated by reference sign M) and a portion where lithium ions enter only shallowly from the first surface 1a (indicated by reference sign N).
In such an anode 1E, when lithium ions enter the vicinity of the second surface 1b, the active layer 11 pushes out the base material layer 15 from the inside thereof, and the second surface 1b may rise in a spot shape. A raised portion is indicated by reference sign 15x.
Alternatively, when the lithium ions enter the anode 1E to reach the second surface 1b, the active layer 11 may penetrate the base material layer 15 and reach the second surface 1b. In this case, the metallic luster of the base material layer 15 is lost at portions 11x where the active layer 11 is exposed on the second surface 1b, and the active layer 11 of a color different from that of the base material layer 15 is exposed in a spot shape.
On the other hand, in the case of the anode in which the standard deviation of length La satisfies the above-described requirement, the second surface 1b has the metallic luster of the base material layer 15, and no scratches or spot-shaped bumps are found.

Thus, the appearance of the second surface 1b reflects whether or not the standard deviation of the interface 1x satisfies the standard, and can be indirectly used as an index for determining a state of the interface 1x.

(Base Material)

As described above, a base material includes one or more metals selected from the group consisting of Al, Si, Sn, and Pb. Specific examples of the base material include high-purity aluminum, high-purity silicon, high-purity tin, and high-purity lead.

The base material inevitably includes a small amount of metallic impurities (unavoidable impurities). Examples of such unavoidable impurities include production residues that are inevitably mixed in a purification step. Specific examples thereof include iron and copper.

The content of unavoidable impurities is 0.1% by mass or less, preferably 0.05% by mass or less, and more preferably 0.01% by mass or less, based on the entire base material.

The base material is preferably aluminum, and specifically, high-purity aluminum. High-purity aluminum refers to aluminum having a purity of 99% by mass or greater. High-purity aluminum has a purity of preferably 99.8% by mass or greater, more preferably 99.9% by mass or greater, still more preferably 99.95% by mass or greater, and even still more preferably 99.99% by mass or greater.

The purity of the base material can be confirmed by an inductively coupled plasma (ICP) analysis method. For example, the purity of the base material can be measured using an ICP optical emission spectrometer (SPS3000, manufactured by SII NanoTechnology Inc.).

Examples of the purification method for purifying aluminum to the above-described purity can include a segregation method and a three-layer electrolysis method.

(Segregation Method)

The segregation method is a purification method that utilizes a segregation phenomenon when molten aluminum is easily solidified, and a plurality of methods thereof have been put into practical use. As for one form of the segregation method, there is a method of pouring molten aluminum into a container, and solidifying the purified aluminum from the bottom while heating and stirring the molten aluminum at the top while rotating the container. Aluminum having a purity of 99% by mass or greater can be obtained by the segregation method.

(Three-Layer Electrolysis Method)

As one form of the three-layer electrolysis method, there is a method in which, first, an aluminum metal having a minimum aluminum content of 99% by mass or greater is charged into an Al-Cu alloy layer. The aluminum metal is then used as a cathode in a molten state, and an electrolytic bath containing, for example, aluminum fluoride and barium fluoride is disposed thereon to precipitate high-purity aluminum on an anode. High-purity aluminum having a purity of 99.999% by mass or greater can be obtained by the three-layer electrolysis method.

The purification method for highly purifying aluminum is not limited to the segregation method and the three-layer electrolysis method, and other known methods such as a zone melting refining method and an ultra-high vacuum melting refining method may be used.

Moreover, the base material may be an aluminum-containing metal. Moreover, the "aluminum-containing metal" may be an aluminum alloy produced by intentionally adding another metal in a fraction of 8.0% by mass or less based on the entire base material. Examples of the other metal include one or more metals selected from the group consisting of Si, Ge, Sn, Ag, Sb, Bi, In and Mg.

When the base material is one or more metals selected from the group consisting of tin and lead, silicon can also be used as the other metal.

In the aluminum-containing metal, it is preferable that the other metal phase be dispersed in an aluminum phase. The aluminum phase corresponds to the "aluminum metal phase" in the present invention. In addition, the other metal phase corresponds to a "non-aluminum metal phase" in the present invention. In the following description, the other metal may be referred to as a "non-aluminum metal".

In the non-aluminum metal phase, it is preferable that the other metal described above be aggregated in particles and dispersed throughout the aluminum metal phase. The expression "in particles (particulate)" is used to express a state in which the non-aluminum metal phase seems to aggregate roundly and form particles, when the surface or cross section of the aluminum-containing metal is observed. For the same reason, the non-aluminum metal phase may be referred to as "particles" in the following description.

That is, in the aluminum-containing metal, the non-aluminum metal phase is preferably dispersed in the aluminum metal phase. The expression "the non-aluminum metal phase is dispersed in the aluminum metal phase" means a state in which a particulate non-aluminum metal phase is present in the aluminum metal phase.

Other metals constituting the non-aluminum metal phase have a very large absorption amount of lithium. Therefore, the non-aluminum metal has a large volume expansion during lithium intercalation and a large volume contraction during lithium deintercalation. The strain caused by the expansion and contraction develops cracking of the non-aluminum metal particles, and miniaturization occurs in which the non-aluminum metal particles become smaller. The miniaturization of the non-aluminum metal acting as the anode active material during charging and discharging causes a shortened cycle life.

The base material is a metal in which the non-aluminum metal phase is dispersed in the aluminum metal phase. In other words, the non-aluminum metal particles in the base material are coated with aluminum that can form an alloy with lithium. When the non-aluminum metal particles are coated with aluminum, the non-aluminum metal particles are less likely to crack and thus are difficult to be finely divided. Therefore, even when the lithium secondary cell is repeatedly charged and discharged, it is easy to maintain the initial discharge capacity. That is, it is possible to improve the discharge capacity retention rate of the lithium secondary cell.

The content of the other metal based on the entire base material is 8.0% by mass or less, preferably 2.0% by mass or less, and more preferably 1.0% by mass or less.

When the other metal is added to the base material, the content of the other metal contained in the base material is preferably 0.01% by mass or greater, more preferably 0.02% by mass or greater, and still more preferably 0.05% by mass or greater, and particularly preferably 0.1% by mass or greater.

The upper limit value and lower limit value of the above-described content of the other metal described above can be randomly combined together. The content of the other metal contained in the base material is preferably 0.01% by mass or greater and 8.0% by mass or less, more preferably 0.02% by mass or greater and 2.0% by mass or less, still more preferably 0.05% by mass or greater and 1.0% by mass or less, and particularly preferably 0.1% by mass or greater and 1.0% by mass or less.

When the content of the non-aluminum metal phase is equal to or greater than the lower limit value, it is possible to sufficiently secure a metal or metal compound other than aluminum that can contribute to the absorption of lithium.

Moreover, when the content of the non-aluminum metal phase is equal to or less than the upper limit value, the non-aluminum metal phase is likely to be well dispersed in the aluminum phase. In addition, when the content of the non-aluminum metal phase is equal to or less than the upper limit value, rolling is easily performed.

Moreover, the non-aluminum metal phase may include Mn, Zn, Ni, and the like as optional metals.

The base material is preferably an Al-Si binary alloy or an Al-Si-Mn ternary alloy. When the base material is a ternary alloy, each metal may be homogeneously dissolved.

When the non-aluminum metal phase is Si, it may further include Sr in order to promote fine dispersion of Si. As a method of adding Sr to promote the solid solution of Si, the method described in Light Metals, Vol. 37, No. 2, 1987, pp. 146-152 can be used.

In a binarized image of the base material layer obtained under the following image acquisition conditions, a ratio of an area corresponding to the non-aluminum metal phase is preferably 10% or less with respect to the total area (the sum of the area corresponding to the aluminum metal phase and the area corresponding to the non-aluminum metal phase).

· Image Acquisition Conditions

The base material layer is rolled into a foil having a thickness of 0.5 mm. The foil is cut perpendicular to a rolling direction and a cross section is etched with a 1.0% by mass of aqueous sodium hydroxide solution. The aluminum metal phase and the non-aluminum metal phase differ in their solubility in sodium hydroxide. Therefore, etching forms a difference in height between irregularities of a portion corresponding to the non-aluminum metal phase exposed to the cross section and a portion corresponding to the aluminum metal phase. Due to the difference in height between irregularities, the contrast becomes clear during microscopic observation, which will be described later.

Next, a cross-sectional image of the cross section is acquired, and the cross-sectional image is subjected to image processing to obtain a binarized image in which convex portions corresponding to the aluminum metal phase and concave portions corresponding to the non-aluminum metal phase are respectively converted. The area of the concave portion corresponds to the area of the non-aluminum metal phase.

A cross-sectional image is acquired using a metallurgical microscope image with a magnification of ×200 or greater and x500 or less. In addition, when objects having a size of 1 $\mu$m or less are also observed in microscopic observation, the objects are observed using, for example, a scanning electron microscope (SEM). In this case, an SEM image with a magnification of ×100 or greater and x10,000 or less is acquired.

For example, Nikon EPIPHOT 300 can be used as a metallurgical microscope.

The obtained SEM image or metallurgical microscope image at the above-described magnification is input into a computer and is subjected to binarization processing using image analysis software. The binarization processing is a process of binarizing the image with an intermediate value between maximum luminance and minimum luminance. By the binarization processing, for example, a binarized image can be obtained in which the portion corresponding to the aluminum metal phase is white and the portion corresponding to the non-aluminum metal phase is black.

A threshold in the binarization processing is appropriately adjusted and set so that the aluminum metal phase recognized in the image before the binarization processing matches the portion corresponding to the aluminum metal phase in the binarized image, by comparing an image before the binarization processing with the binarized image. When the aluminum metal phase recognized in the image before the binarization processing does not match the portion corresponding to the aluminum metal phase, a threshold which minimizes the difference between the aluminum metal phase in the image before the binarization processing and the portion corresponding to the aluminum metal phase in the binarized image is selected.

A threshold may be appropriately adjusted and set by comparing the non-aluminum metal phase recognized in the image before the binarization processing with the portion corresponding to the non-aluminum metal phase in the binarized image.

As the image analysis software, software capable of performing the above binarization processing can be appropriately selected. Specifically, Image J, Photoshop, Image Pro Plus, or the like can be used.

In the binarized image, an area corresponding to the aluminum metal phase is defined as S1, and an area corresponding to the non-aluminum metal phase is defined as S2. A ratio of S2 to the sum of S1 and S2 (S2/[S 1 + S2]) $\times$ 100(%) is preferably 10% or less, more preferably 6% or less, and particularly preferably 3% or less.

When the ratio of S2 is equal to or less than the upper limit value, the non-aluminum metal particles are sufficiently coated with aluminum, so that the non-aluminum metal particles are less likely to crack. Therefore, even when the lithium secondary cell is repeatedly charged and discharged, it is easy to maintain the initial discharge capacity.

(Dispersion State)

A dispersion state of the non-aluminum metal phase in the base material can be grasped by observing, for example, a cross section of a foil-shaped base material layer having a thickness of 0.5 mm through the following method.

A foil of the base material layer is cut, and the cross section thereof is etched using an aqueous sodium hydroxide solution as in the above-described "· Image Acquisition Conditions". Concave portions corresponding to the non-aluminum metal phase are exposed to the cross section. A SEM image (magnification of x300) and a metallurgical microscope image (magnification of x300) are acquired for the cross section after etching. Considering that one concave portion corresponds to one particle (one non-aluminum metal phase), the particle size of particles exposed to the cross section and the number of particles are measured.

The base material layer preferably satisfies both the following Conditions (1) and (2). Condition (1) is determined from the SEM image. Condition (2) is determined from the metallurgical microscope image.

Condition (1): The number density of non-aluminum metal particles having a particle size of 0.1 $\mu$m or greater and less than 100 $\mu$m is 1,000/mm$^2$ or less.

Condition (2): The number density of non-aluminum metal particles having a particle size of 100 $\mu$m or greater is 25 particles/mm$^2$ or less.

The particle size of the non-aluminum metal particles is measured as a distance (constant direction diameter) between parallel lines when the SEM image and an image of the concave portions (non-aluminum metal particles) in the metallurgical microscope image are sandwiched by two parallel lines drawn in a constant direction.

The expression "number density" means a density of the number of non-aluminum metal particles present per unit area in the SEM image and the metallurgical microscope image. The number density is obtained by obtaining an area of an imaging range of the SEM image or the metallurgical microscope image from a magnification of the observed image, and dividing the number of particles under a predetermined condition included in the field of view by the area of the imaging range.

(Vickers Hardness)

Moreover, when the metal constituting the base material is aluminum, the Vickers hardness of a base material layer 15 is preferably 10 HV or greater and 100 HV or less. The Vickers hardness of the base material layer 15 is preferably 10 HV or greater and 70 HV or less, more preferably 20 HV or greater and 70 HV or less, and still more preferably 30 HV or greater and 70 HV or less.

As the Vickers hardness, Vickers hardness (HV: 0.05) measured by the following method using a micro Vickers hardness meter is used.

(Method for Measuring Vickers Hardness)

The Vickers hardness is a value measured according to JIS Z2244: 2009 "Vickers hardness test-test method". The Vickers hardness is measured by pushing a diamond indenter of a square pyramid into a surface of a test piece of the base material layer 15, releasing a test force thereof, and then calculating the Vickers hardness from a diagonal length of a dent remaining on the surface.

The above standard stipulates that a hardness symbol is changed according to the test force. In the present embodiment, the Micro Vickers hardness of HV 0.05 is measured when the test force is 0.05 kgf (= 0.4903 N).

If the Vickers hardness is the upper limit value or less, it is presumed that a strain of a crystal structure of the base material when lithium is absorbed can be relaxed, and the crystal structure can be thus maintained. Therefore, the anode 1 can maintain a discharge capacity even when the anode 1 is used in the lithium secondary cell and repeatedly charged and discharged.

(Average Corrosion Rate)

The base material layer preferably has an average corrosion rate of 0.2 mm/year or less as measured by an immersion test under the following immersion conditions.

(Method for Measuring Average Corrosion Rate)

· Immersion Conditions

The base material layer is a test metal piece having a size of 40 mm in length, 40 mm in width, and 0.5 mm in thickness.

The test metal piece is immersed in a 3.5% NaCl aqueous solution adjusted to pH 3 using acetic acid as a pH-adjusting agent, and the test metal piece is removed after 72 hours. As for an immersion temperature, a liquid temperature is set to 30°C.

A degree of corrosion is represented by mg of corrosion weight loss per day with respect to 1 mm$^2$ surface area of the test metal piece. That is, the degree of corrosion can be calculated by the following equation. A precision balance is used to measure the mass.

$$\text{Degree of corrosion} = (\text{mass (mg) of test metal piece before immersion - mass (mg) of test metal piece after immersion})/(\text{surface area of test metal piece (mm}^2) \times \text{number of test days (day)})$$

The corrosion rate is calculated by the following method from the obtained degree of corrosion.

$$\text{Corrosion rate (mm/year)} = [\text{degree of corrosion} \times 365]/\text{test piece density (g/cm}^3)$$

Before being immersed in the 3.5% NaCl aqueous solution adjusted to pH 3, the test metal piece may be washed with alcohol such as ethanol.

When the average corrosion rate is used as a determination index, the base material layer is preferably formed of high-purity aluminum or high-purity aluminum alloy of the following (1) to (5).

(1) High-Purity Aluminum-Magnesium Alloy 1

An alloy is formed of aluminum with a purity of 99.999% and magnesium. The content of magnesium is 0.1% by mass or greater and 4.0% by mass or less in the total amount of the aluminum-containing metal. The average corrosion rate is 0.04 mm/year to 0.06 mm/year.

(2) High-Purity Aluminum-Magnesium Alloy 2

An alloy is formed of aluminum with a purity of 99.9% and magnesium. The content of magnesium is 0.1% by mass or greater and 1.0% by mass or less in the total amount of the aluminum-containing metal. The average corrosion rate is 0.1 mm/year to 0.14 mm/year.

(3) High-Purity Aluminum-Nickel Alloy

An alloy is formed of aluminum with a purity of 99.999% and nickel. The content of nickel is 0.1% by mass or greater and 1.0% by mass or less in the total amount of the aluminum-containing metal. The average corrosion rate is 0.1 mm/year to 0.14 mm/year.

(4) High-Purity Aluminum-Manganese-Magnesium Alloy

An alloy is formed of aluminum with a purity of 99.99%, manganese, and magnesium. The total content of manganese and magnesium is 1.0% by mass or greater and 2.0% by mass or less in the total amount of the aluminum-containing metal. The average corrosion rate is 0.03 mm/year to 0.05 mm/year.

(5) High-Purity Aluminum

Aluminum has a purity of 99.999%. The average corrosion rate is 0.05mm/year.

(Crystal Orientation of Base Material)

The metal anode is formed of a rolled material of the base material. When the surface of the base material layer is measured by an electron backscattered diffraction pattern (EBSD) method and a crystal orientation of a plurality of metal crystals constituting the base material layer is obtained, the base material layer preferably satisfies the following relationship.
In a cumulative frequency distribution curve (cumulative frequency distribution curve 1) of an absolute value of an angle, which is formed by a rolled surface of the base material layer and a normal line of a {111} plane of the metal crystal included in the base material, which is obtained by measuring the surface of the base material layer by the EBSD method, an angle at which a cumulative frequency from a low angle side becomes 50% or greater is preferably 20° or less when the total is 100%. In the following description, "the {111} plane of the metal crystal contained in the base material" may be simply referred to as a "{111} plane".
The expression "the angle formed by the rolled surface and the normal line of the {111} plane of the metal crystal included in the base material" means an angle of 90° or less, which is an angle between projection of the normal line of the {111} plane on the rolled surface and the normal line of the {111} plane. When the rolled surface and the normal line of the {111} plane are parallel, the above-described angle is not formed. In this case, the angle formed is 0°.
In a cumulative frequency distribution curve (cumulative frequency distribution curve 2) of an absolute value of an angle, which is formed by a rolling direction (RD) of the base material layer and a normal line of a {111} plane of the metal crystal included in the base material, which is obtained by measuring the surface of the base material layer by the EBSD method, an angle at which a cumulative frequency from a low angle side becomes 50% or greater is preferably 20° or less when the total is 100%.

(Method for Measuring Crystal Orientation of Base Material)

The EBSD method is commonly used as a method for analyzing the orientation distribution of a crystal aggregate structure. Normally, the EBSD method is implemented using a device that equips a scanning electron microscope with an electron backscattered diffraction detector.
As the scanning electron microscope, for example, JSM-7900F manufactured by JEOL Ltd. can be used.
As the electron backscattered diffraction detector, for example, Symmetry manufactured by Oxford Instruments Co., Ltd. can be used.
The measurement using the EBSD method is performed on the second surface 1b of the metal anode. In order to obtain a clear electron backscattered diffraction image on the second surface 1b in the measurement, it is preferable to first remove a coating formed on the second surface 1b.
As a method for removing the coating on the second surface 1b, for example, chemical etching using acid or the like or ion etching using argon ions or the like can be used. Alternatively, the coating on the surface may be removed by mechanical polishing such as buffing.

In order to suppress deterioration of the crystal aggregate structure of the base material layer, the coating on the second surface 1b is preferably removed by a planar argon ion milling method. The planar argon ion milling method is a method for processing a wide range by obliquely irradiating the surface of the base material layer with an argon ion beam and eccentrically aligning the center of the argon ion beam and the center of rotation of the sample.

When the coating of the surface of the base material layer is removed by the planar argon ion milling method, for example, IB-19520CCP manufactured by JEOL Ltd. can be used.

After the coating of the surface is removed, the surface of the base material layer is irradiated with an electron beam. Thereafter, a diffraction pattern of backscattered electrons is read by the device. The obtained diffraction pattern is input into the computer, and the surface of the base material layer is scanned while simultaneously performing crystal orientation analysis.

As a result, the crystal is indexed at each measurement point, and the crystal orientation can be obtained. The crystal orientation calculated at each measurement point is recorded on the computer.

As for a pixel size of a crystal orientation map obtained by measuring by the EBSD method according to a size of the crystal constituting the base material layer, one side of the pixel is preferably 3 $\mu$m or less, and more preferably 1 $\mu$m or less. In addition, the analysis region is preferably analyzed in a region of 10 mm$^2$ or greater and 100 mm$^2$ or less in consideration of variations in the crystal aggregate structure according to a location.

The recorded crystal orientation information at each measurement point indicates the crystal orientation of the base material crystal constituting the surface of the base material layer at each measurement point with respect to the rolled surface (surface $\alpha$, second surface 1b) of the base material layer. The smaller the crystal orientation angle, the closer the parallel to the normal line of the {111} plane and the rolled surface.

By aggregating the crystal orientation information at each measurement point, the cumulative frequency distribution curve (1) can be obtained for an absolute value of an angle formed by the plane $\alpha$ and the normal line to the {111} plane. The cumulative frequency distribution curve 1 indicates a cumulative frequency from the low angle side with respect to the absolute value of the angle formed by the surface $\alpha$ and the normal line of the {111} plane at each measurement point. When all measurement points are cumulated, the frequency is 100%.

In the cumulative frequency distribution curve 1 of the base material layer, the angle at which the cumulative frequency is 50% or greater is preferably 20° or less, more preferably 15° or less, and still more preferably 12° or less.

When lithium ions enter the base material, the lithium ions enter the crystal of the base material parallel to the {111} plane. Similarly, when lithium ions are deintercalated from the base material, the lithium ions are deintercalated in a direction parallel to the {111} plane.

Therefore, on the first surface 1a of the metal anode, the {111} plane is preferably perpendicular to the first surface 1a so as not to hinder the intercalation and deintercalation of lithium ions. In the relationship with the normal line of the {111} plane, it can be said that the smaller the angle between the normal line of the {111} plane and the surface $\alpha$, the more preferred the relationship.

In addition, when the material of the metal anode is a rolled material, it is considered that the first surface 1a and the second surface 1b have the same structure. Therefore, it is possible to confirm a state of the structure of the first surface 1a that contributes to the intercalation and deintercalation of lithium ions from the measurement result of the second surface 1b.

When the angle at which the cumulative frequency from the low angle side is 50% or more is equal to or less than the upper limit value, it is considered that the {111} plane is oriented in a form perpendicular to the rolled surface of the base material layer.

With such an orientation, the orientation of the crystal plane is suitable for deintercalation and intercalation of lithium. In addition, it is presumed that the structure becomes a crystal aggregate structure which is easily adaptable to the volume change when lithium is deintercalated and intercalated. Therefore, if the cumulative frequency in the cumulative frequency distribution curve 1 is a base material layer that satisfies the relationship described above, the discharge capacity retention rate of the lithium secondary cell can be improved.

Moreover, the cumulative frequency distribution curve 2 of an absolute value of an angle formed by the rolling direction (RD) of the base material layer and the normal line of the {111} plane is obtained from the crystal orientation information at each measurement point. The smaller the angle, the more the normal line of the {111 }plane is determined to be strongly oriented in the rolling direction.

The cumulative frequency distribution curve 2 indicates a cumulative frequency from the low angle side with respect to the absolute value of the angle formed by the rolling direction of the base material layer and the normal line of the {111} plane at each measurement point. When all measurement points are cumulated, the frequency is 100%.

In the cumulative frequency distribution curve 2 of the base material layer, the angle at which the cumulative frequency is 50% or greater is preferably 20° or less, more preferably 15° or less, and still more preferably 12° or less.

<<Production Method for Metal Anode>>

The anode 1 can be produced by producing an anode body using the above-described base material by a production method that provides a casting step and processing step in this order, and then charging the obtained anode body. Hereinafter, a case where the base material of the anode 1 is high-purity aluminum will be described by way of example.

(Casting Step)

In the casting step, a treatment for melting aluminum at about 680°C or higher and 800°C or lower and removing and purifying generally known gas or non-metal inclusions (for example, vacuum treatment of molten alloy) is performed.
The vacuum treatment is performed under conditions of, for example, 700°C or higher and 800°C or lower, 1 hour or longer and 10 hours or shorter, and a vacuum degree of 0.1 Pa or higher and 100 Pa or lower.
As a treatment for purifying aluminum, a treatment for blowing flux, inert gas, or chlorine gas into the molten aluminum can be also used. The molten aluminum purified by the vacuum treatment or the like is usually cast in a casting mold to obtain an aluminum ingot.
The casting mold is obtained by using iron or graphite heated to 50°C or higher and 200°C or lower. Aluminum is cast by a method of pouring molten aluminum at 680°C or higher and 800°C or lower into the casting mold. In addition, ingots can also be obtained by continuous casting, which is generally used.
An aluminum alloy can be obtained by adding a predetermined amount of other metal elements to be alloyed during melting in the above-described casting step.

(Processing Step)

The obtained aluminum ingot or aluminum alloy ingot is processed into a plate shape by subjecting to a rolling process, an extruding process, a casting process, and the like.
In the rolling process of the ingot, for example, hot rolling and cold rolling are performed to process the aluminum ingot or the aluminum alloy ingot into a plate shape.
Examples of a temperature condition for performing hot rolling include a temperature of the aluminum ingot or the aluminum alloy ingot of 350°C or higher and 450°C or lower.
In the rolling process, the material repeatedly passes between a pair of rolling rolls to finish it to have a target thickness. Passing between the pair of rolling rolls is referred to as "pass".
A processing rate r per pass (1 pass) is a thickness reduction ratio when passing through the rolling roll once, and is calculated by the following expression.

$$r = (T0 - T)/T0 \times 100$$

(T0: thickness before passing through the rolling roll, T: thickness after passing through the rolling roll)
In the present embodiment, it is preferable that the aluminum ingot or the aluminum alloy ingot be repeatedly rolled under a condition of the processing rate r of 2% or greater and 20% or less so as to have the target thickness.
After hot rolling and before cold rolling, an intermediate annealing treatment may be performed. In the intermediate annealing treatment, for example, the hot-rolled aluminum ingot or aluminum alloy ingot may be heated to 350°C or higher and 450°C or lower, and may be allowed to cool immediately after raising the temperature.
In addition, the aluminum ingot or the aluminum alloy ingot may be heated to 350°C or higher and 450°C or lower, and allowed to cool after maintaining for about 1 hour or longer to 5 hours or shorter at the raised temperature. By this treatment, the material of the aluminum ingot or the aluminum alloy ingot is softened to obtain a state where it is easily cold-rolled.
Cold rolling is performed, for example, at a temperature lower than a recrystallization temperature of the aluminum ingot or the aluminum alloy ingot, in general, a temperature from room temperature to 80°C or lower. In the cold rolling of one pass, the aluminum ingot is repeatedly rolled under a condition of the processing rate r of 1% or greater and 10% or less so as to have the target thickness.
A plate material obtained through the above steps is a plate-shaped "anode body" formed of the base material. The anode body has a first surface and a second surface facing each other.
When the type of the base material is changed, the temperature in the casting step and the temperature in the processing step are changed according to the melting point of the base material.

(Step of Charging)

FIG. 4 is a schematic view showing the production method of the anode 1. The anode 1 is produced by charging a plate-shaped anode body 10 obtained through the above-described steps. The anode body 10 has a first surface 10a and a second surface 10b facing each other.

As shown in FIG. 4, an electrolytic solution (electrolyte) 509 in which lithium ions ($Li^+$) are dissolved is stored in a container 500. The anode body 10 and a cathode 501 are immersed in the electrolytic solution 509.

The electrolytic solution 509 contains an electrolyte and an organic solvent.

As the electrolyte that is contained in the electrolytic solution 509, lithium salts such as $LiClO_4$, $LiPF_6$, $LiAsF_6$, $LiSbF_6$, $LiBF_4$, $LiCF_3SO_3$, $LiN(SO_2CF_3)_2$, $LiN(SO_2C_2F_5)_2$, $LiN(SO_2CF_3)(COCF_3)$, $Li(C_4F_9SO_3)$, $LiC(SO_2CF_3)_3$, $Li_2B_{10}Cl_{10}$, LiBOB (here, BOB represents bis(oxalato)borate), LiFSI (here, FSI represents bis(fluorosulfonyl)imide), lower aliphatic carboxylic acid lithium salts, and $LiAlCl_4$ are exemplary examples, and a mixture of two or more of these electrolytes may be used. Among these, a mixture containing at least one selected from the group consisting of $LiPF_6$, $LiAsF_6$, $LiSbF_6$, $LiBF_4$, $LiCF_3SO_3$, $LiN(SO_2CF_3)_2$, and $LiC(SO_2CF_3)_3$ that contain fluorine is preferably used as the electrolyte.

In addition, as the organic solvent that is contained in the electrolytic solution 509, it is possible to use, for example, carbonates such as propylene carbonate, ethylene carbonate, dimethyl carbonate, diethyl carbonate, ethyl methyl carbonate, 4-trifluoromethyl-1,3-dioxolan-2-one, and 1,2-di(methoxycarbonyloxy)ethane; ethers such as 1,2-dimethoxyethane, 1,3-dimethoxypropane, pentafluoropropyl methyl ether, 2,2,3,3-tetrafluoropropyl difluoromethyl ether, tetrahydrofuran, and 2-methyltetrahydrofuran; esters such as methyl formate, methyl acetate, and $\gamma$-butyrolactone; nitriles such as acetonitrile and butyronitrile; amides such as N,N-dimethylformamide and N,N-dimethylacetamide; carbamates such as 3-methyl-2-oxazolidone; sulfur-containing compounds such as sulfolane, dimethyl sulfoxide, and 1,3-propanesultone, or compounds in which a fluoro group is further introduced into these organic solvent (compounds in which one or more hydrogen atoms in the organic solvent are substituted with a fluorine atom).

As the organic solvent, two or more of the above-described organic solvents are preferably used in a mixture form. Among these, a mixed solvent containing a carbonate is preferable, and a mixed solvent of a cyclic carbonate and a non-cyclic carbonate and a mixed solvent of a cyclic carbonate and an ether are still more preferable. As the mixed solvent of a cyclic carbonate and a non-cyclic carbonate, a mixed solvent containing ethylene carbonate, dimethyl carbonate, and ethyl methyl carbonate is preferable. The electrolytic solution 509 for which such a mixed solvent is used has a number of features as follows: the electrolytic solution 509 has a broad operating temperature range, does not easily deteriorate even when the lithium secondary cell is charged and discharged at a high current rate, and does not easily deteriorate even after being used for a long period of time.

Moreover, as the electrolytic solution 509, it is preferable to use an electrolytic solution containing a lithium salt containing fluorine such as $LiPF_6$ and an organic solvent having a fluorine substituent in terms of enhanced safety of lithium secondary cells to be obtained. A mixed solvent containing an ether having a fluorine substituent such as pentafluoropropyl methyl ether or 2,2,3,3-tetrafluoropropyl difluoromethyl ether and dimethyl carbonate is still more preferable since the discharge capacity retention rate is high even when the lithium secondary cell is charged and discharged at a high current rate.

The first surface 10a of the anode body 10 faces the cathode 501. Accordingly, the electrolyte is disposed between the anode body 10 and the cathode 501. As the cathode 501, a known cathode for a lithium secondary cell can be used.

A separator 504 may be disposed between the anode body 10 and the cathode 501. As the separator 504, a known separator can be used.

As the separator 504, it is possible to use, for example, a material that is made of a material such as a polyolefin resin such as polyethylene or polypropylene, a fluororesin, or a nitrogen-containing aromatic polymer and has a form such as a porous film, a nonwoven fabric, or a woven fabric. In addition, a separator 170 may be formed using two or more of these materials or the separator 504 may be formed by laminating these materials.

The air impermeability of the separator 504 by the Gurley method specified by JIS P 8117 is preferably 50 sec/100 cc or greater and 300 sec/100 cc or less and more preferably 50 sec/100 cc or greater and 200 sec/100 cc or less in order to favorably permeate the electrolyte while the battery is in use (while the battery is being charged and discharged).

In addition, the porosity of the separator 504 is preferably 30 vol% or greater and 80 vol% or less and more preferably 40 vol% or greater and 70 vol% or less. The separator 504 may be a laminate in which separators having different porosities are laminated.

Next, the anode body 10 and the cathode 501 are connected by a wiring 503, and the anode body 10 is charged from a power supply 505 in a state where the electrolytic solution 509 is disposed between the anode body 10 and the cathode 501.

Charging is performed with a constant current to the anode body 10. In this case, a charging current density for the anode body 10 is controlled to 0.6 mA/cm$^2$ or greater and 30 mA/cm$^2$ or less. The charging current density may be 0.8 mA/cm$^2$ or greater, 1 mA/cm$^2$ or greater, or 3 mA/cm$^2$ or greater. In addition, the charging current density may be 15 mA/cm$^2$ or less or 10 mA/cm$^2$ or less. The upper limit value and lower limit value of the charging current density can be randomly combined together.

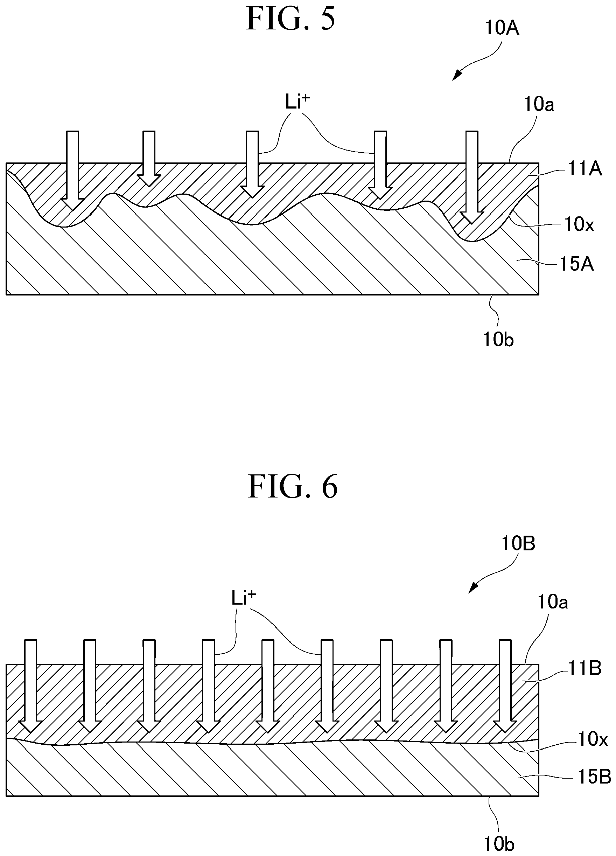

FIGS. 5 and 6 are schematic sectional views explaining states when the anode body is charged. FIG. 5 shows a case where the charging current density is less than the lower limit value, and FIG. 6 shows a case where the charging current density is within the above range.

The inventors presume that the target anode 1 can be produced by a phenomenon, which will be described later, occurring in the step of charging. However, the present invention is not limited to the following mechanism.

First, as shown in FIG. 5, when the charging current density is small (for example, when the charging current density is 0.5 mA/cm$^2$), a current supplied to an anode body 10A during charging, that is, lithium ions bound to electrons are also small. Therefore, it is considered that lithium ions intercalated from the electrolytic solution 509 to the anode body 10 are sparsely intercalated from the first surface 10a.

In this case, in a structure of the anode body 10A into which lithium ions have entered, it is considered that lithium ions and electrons are bound to each other to generate a lithium metal, thereby forming an active layer 11A, and a metal crystal lattice of the anode body 10A is expanded. On the other hand, it is considered that the metal crystal lattice of the anode body 10 is maintained in the structure into which lithium ions have not entered.

Therefore, in the structure of the anode body 10A into which lithium ions have entered, it is considered that lithium ions are relatively and easily intercalated and enter deeply in the thickness direction, compared to a structure in which lithium ions do not enter the anode body 10A. As a result, in the anode body 10A, a location at which lithium ions enter deeply and a location at which lithium ions enter only shallowly are generated, and a standard deviation of length, which is from the second surface 10b to the active layer 11A (interface 10x) in a base material layer 15A, does not satisfy 0 or greater and 10 or less.

On the other hand, as shown in FIG. 6, when the charging current density is large and satisfies 0.6 mA/cm$^2$ or greater and 30 mA/cm$^2$ or less, compared to the state illustrated in FIG. 5, the current supplied to the anode body 10B during charge, that is, the number of lithium ions that bond with electrons increases. Therefore, as compared with the state shown in FIG. 5, it is considered that lithium ions intercalated from the electrolytic solution 509 to the anode body 10B are widely intercalated from the first surface 10a.

Therefore, in the anode body 10B, a structure (active layer 11A) into which lithium ions have entered is evenly generated in a surface direction of the first surface 10a, and there is little difference in ease of lithium ion intercalation in the surface direction of the first surface 10a. As a result, in the anode body 10B, it is difficult for a location where lithium ions enter deeply and a location where lithium ions enter only shallowly to be generated. Therefore, it is considered that an anode can be obtained in which the standard deviation of length from the second surface 10b to the active layer 11A (interface 10x) satisfies 0 or greater and 10 or less.

Moreover, charging can be performed on the anode body 10 at a constant voltage. In this case, the charging current density for the anode body 10 is controlled to 0.6 mA/cm$^2$ or greater. The charging current density may be 0.8 mA/cm$^2$ or greater, 1 mA/cm$^2$ or greater, or 3 mA/cm$^2$ or greater. In addition, the charging current density may be 15 mA/cm$^2$ or less or 10 mA/cm$^2$ or less. The upper limit value and lower limit value of the charging current density can be randomly combined together.

Even in a case where constant voltage charging is performed on the anode body 10, it is considered that by controlling the charging current density to 0.6 mA/cm$^2$ or greater, an anode can be obtained in which the standard deviation of length from the second surface 10b to the active layer 11A is 0 or greater and 10 or less by an assumption mechanism shown in FIG. 6.

According to the metal anode 1 configured as described above, a metal anode having good cycle characteristics can be obtained without using a cladding material.

Moreover, according to the production method for a metal anode as described above, it is possible to easily produce a metal anode having good cycle characteristics without using a cladding material.

In the present embodiment, when producing the metal anode, the anode body is charged in the container 500 in which the electrolytic solution 509 is stored, but the present invention is not limited thereto. A lithium secondary cell, which will be described below, may be assembled using the anode body in place of the anode, and a metal anode may be produced within the cell by charging the lithium secondary cell during initial charge while controlling the charging current density to 0.6 mA/cm$^2$ or greater and 30 mA/cm$^2$ or less at a constant current.

[Second Embodiment]

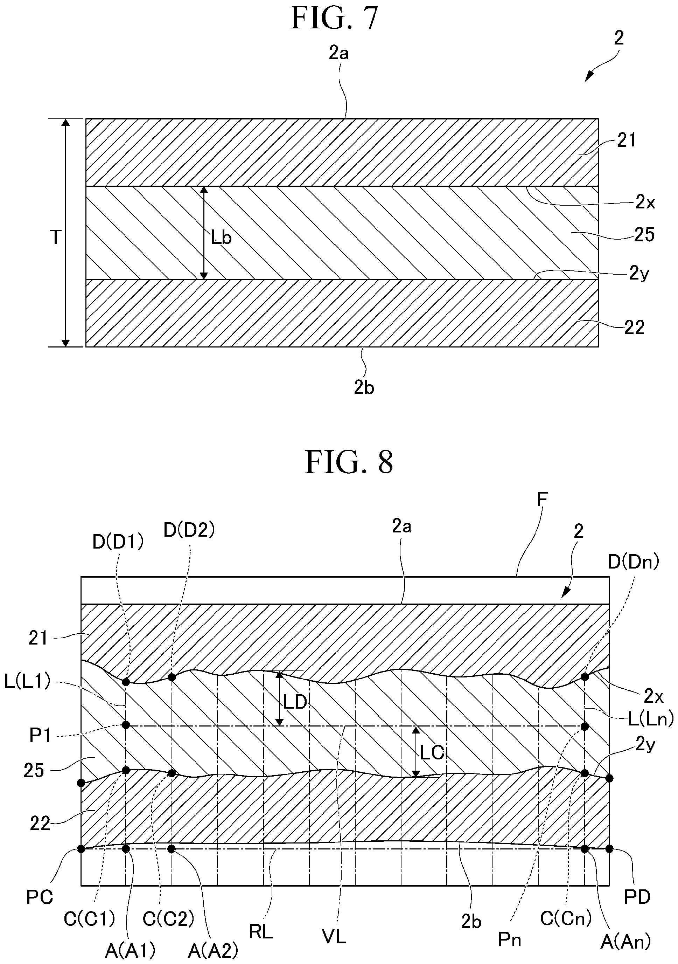

FIGS. 7 to 9 are explanatory views of a metal anode according to a second embodiment of the present invention. In the present embodiment, the same reference signs are given to the same components as in the first embodiment, and detailed description thereof will be omitted.

FIG. 7 is a schematic sectional view showing an example of a metal anode 2 according to the present embodiment. In the following description, a metal anode 2 may be simply abbreviated as an "anode 2".

The anode 2 is a plate-shaped member having a first surface 2a and a second surface 2b facing each other. In the anode 2, a distance between a first surface 2a and a second surface 2b corresponds to a thickness T of the anode 2. The thickness T of the anode 2 can adopt the same value as the thickness of the anode 1 in the first embodiment. For variations in the measurement value of the thickness of the anode 2, the same value as the variation in the measurement value of the thickness of the anode 1 can be adopted. A method for measuring the thickness of the anode 2 is the same as the measuring method described in the first embodiment.

The anode 2 is composed of lithium and a base material in which lithium is solid-dissolved. Specifically, the anode 1 includes a first active layer 21 that is present on a side of the first surface 2a and formed of lithium and a base material, a second active layer 22 that is present on a side of the second surface 2b and formed of lithium and the base material, and a base material layer 25 formed of the base material.

The base material layer 25 is located between the first active layer 21 and the second active layer 22. The first active layer 21 and the base material layer 25 are laminated in contact with each other. The first active layer 21 and the base material layer 25 form a first interface 2x (interface 2x) at a contact position.

Moreover, the second active layer 22 and the base material layer 25 are laminated in contact with each other. The second active layer 22 and the base material layer 25 form a second interface 2y (interface 2y) at a contact position.

The first active layer 21 and the second active layer 22 function as anode active materials. The base material layer 25 functions as a current collector. That is, the anode 2 is a current collector integrated anode serving as the anode active material and the current collector. Therefore, the anode 2 does not require the current collector as a separate member.

<Active Layer>

Like the active layer 11 of the first embodiment, the first active layer 21 and the second active layer 22 are interstitial solid solution layers in which lithium penetrates between atoms of the base material in a charged state, and are porous layers. In addition, the active layer 11 releases lithium solid-dissolved in the base material in a discharged state and approaches the base material. That is, the first active layer 21 and the second active layer 22 function as anode active materials.

As the base material, the base material described in the first embodiment can be used.

<Base Material Layer>

The base material layer 25 is formed of the base material described above, and a metal composition does not change in both the charged state and the discharged state. In addition, the base material layer 25 is formed continuously and integrally with the first active layer 21 and the second active layer 22, and is conductive with the first active layer 21 and the second active layer 22. That is, the base material layer 25 functions as a current collector.

The base material layer 25 has a standard deviation of length Lb, which is from the interface 2x between the first active layer 21 and the base material layer 25 to the interface 2y between the second active layer 22 and the base material layer 25, of 0 or greater and 10 or less. The standard deviation of length Lb is ideally 0, but may be 1 or greater, 1.5 or greater, or 2 or greater. In addition, the standard deviation of length Lb may be 8 or less, 7 or less, or 6 or less.

The upper limit value and lower limit value of the standard deviation can be randomly combined together. The standard deviation may be 1 or greater and 8 or less, 1.5 or greater and 7 or less, or 2 or greater and 6 or less.

The "standard deviation of length Lb" is obtained as follows.

(Method for Calculating Standard Deviation of Length Lb)

First, a cross section of the anode 2 is prepared under the conditions described above (Method for Calculating Standard Deviation of Length La), to obtain an SEM image of the obtained cross section.

From the obtained SEM image, the length Lb is measured by the same method as described above (Method for Calculating Standard Deviation of Length La) to obtain a standard deviation of length Lb.

FIG. 8 is an explanatory view showing a method for obtaining a standard deviation of length Lb, and is a view corresponding to FIG. 2. FIG. 8 is a schematic view of the SEM image of the anode 2 captured under the above-described conditions.

When obtaining the standard deviation of the "length from the interface 2x to the interface 2y", first, a reference on a side of the interface 2y is set. In the SEM image, a virtual line connecting a first intersection point PC between the second surface 2b of the anode 2 and the outer frame F and a second intersection point PD between the second surface 2b of the anode 2 and the outer frame F is set. The virtual line refers to a reference line (first reference line) RL on the

16

side of the second surface 2b.

The intersection point between the second surface 2b and the outer frame F in the SEM image may be determined based on whether or not the SEM image is focused.

Since the SEM image is focused on the base material layer exposed to the cross section, a focal depth of the SEM from a lens can be determined to be substantially the same as the base material layer in the focused portion. In other words, it can be determined that the focused portion in the SEM image is located in the same depth of focus range as the base material layer, and can be considered to be located on the same plane as the base material layer in the cross section. In addition, it can be considered that an out-of-focus portion in the SEM image is not located on the same plane as the base material layer in the cross section.

Therefore, in the vicinity of the intersection point between the second surface 2b and the outer frame F, a portion between the focused portion and the out-of-focus portion may be determined as a position of the second surface 2b by using the focus of the image as a determination criterion, and the intersection points PC and PD between the second surface 2b and the outer frame F may be defined.

The above operations can be easily performed by those skilled in the art. Further, even if the reference lines RL do not strictly match according to the determination of the person who performs the operation, the effect on the result obtained by the operation described later is slight.

Next, in the reference line RL on the SEM image, a plurality of reference points A (A1, A2, ..., and An) from the intersection point PC to the intersection point PD are set. A distance between the adjacent reference points A is 15 $\mu$m in actual size. The perpendicular line (first perpendicular line) is extended from each reference point A to set an intersection point C (C1, C2, ..., or Cn) between the perpendicular line and the interface 2y and an intersection point D (D1, D2, ..., or Dn) between the perpendicular line and the interface 2x are set. A length of a line segment L (L1, L2, ..., or Ln) connecting each intersection point C and the intersection point D is obtained.

In this case, when voids are formed in the base material layer and a plurality of intersection points are formed between the perpendicular line extending from the reference point A and the interface 2y of the base material layer, an intersection point that is closest to the reference point A (intersection point that is closest to the second surface 2b) is defined as the intersection point C. In addition, when a plurality of intersection points are formed between the perpendicular line extending from the reference point A and the interface 2x of the base material layer, an intersection point that is farthest from the reference point A (intersection point that is farthest from the second surface 2b) is defined as the intersection point D.

The same operation is performed on each of the SEM images of the five fields of view, and the length Lb of a plurality of line segments L is obtained in each field of view.

A standard deviation is calculated for the obtained measurement value (length Lb) of the plurality of line segments L. Accordingly, the standard deviation of length Lb is obtained based on the reference line set on the side of the second surface 2b.

Next, after a virtual line connecting the intersection points between the first surface 2a of the anode 2 and the outer frame F is set as a reference line on a side of the first surface 2a, the standard deviation of length Lb (first standard deviation) is obtained based on the reference line set on the side of the first surface 2a in the same manner as described above.

Briefly referring to the above-described method, in the SEM image, a virtual line (second reference line) for connecting an intersection point (third intersection point) between the first surface 2a and the outer frame F and an intersection point (fourth intersection point) between the first surface 2a and the outer frame is set.

On the second reference line, a plurality of reference points are set at distances corresponding to 15 $\mu$m in actual size between the third intersection point and the fourth intersection point. The perpendicular line (second perpendicular line) is extended from each reference point to a line corresponding to the interface on the SEM image to set an intersection point between the perpendicular line and the interface between the first active layer and the base material layer and an intersection point between the perpendicular line and the interface between the second active layer and the base material layer. A length is obtained for a line segment connecting two intersection points set on each perpendicular line.

The same operation is performed on each of scanning electron microscope images of five fields of view, and a standard deviation (second standard deviation) is obtained for measurement values of the plurality of obtained line segments.

An arithmetic average value of the two standard deviations (the first standard deviation and the second standard deviation) obtained as described above is set as the target standard deviation of length Lb.

In addition, when a virtual line VL connecting a midpoint P1 of the line segment L1 and a midpoint Pn of the line segment Ln is assumed, the maximum value among the lengths from the virtual line VL to the plurality of intersection points C is defined as LC, and the maximum value thereof among the lengths from the virtual line VL to the plurality of intersection points D is defined as LD. When the sum of the maximum value LC and the maximum value LD is large, it can be determined that the interface 2x and the interface 2y are greatly wavy, and when the total is small, it can be determined that the interface 2x and the interface 2y are not wavy.

In this case, the sum of the maximum value LC and the maximum value LD may not be compared with the average value of the length Lb of the line segment L, and relative comparison of "large" and "small" may be performed for the total.

The sum of the maximum value LC and the maximum value LD is preferably closer to the arithmetic average value of the length Lb.

The anode 2 having the standard deviation of length Lb in the relationship described above has a smaller variation in length from the interface 2x to the interface 2y compared to the anode having the standard deviation of length Lb that does not satisfy the above-described requirement. Therefore, during discharging of the lithium secondary cell using the anode 2, deintercalation of lithium ions can be expected to occur without deviation from the first surface 2a and the second surface 2b. Similarly, during charging of the lithium secondary cell using the anode 2, intercalation of lithium ions can be expected to occur without deviation from the first surface 2a and the second surface 2b. Therefore, the anode 2 is less likely to be distorted during charging and discharging, and damage is suppressed, so that improvement in cycle characteristics can be expected.

The anode 2 having the standard deviation of length Lb in the relationship described above has a smaller variation in length from the interface 2x to the interface 2y compared to the anode having the standard deviation of length Lb that does not satisfy the above-described requirement. Therefore, during discharging of the lithium secondary cell using the anode 2, deintercalation of lithium ions can be expected to occur without deviation from the first surface 2a and the second surface 2b. Similarly, during charging of the lithium secondary cell using the anode 2, intercalation of lithium ions can be expected to occur without deviation from the first surface 2a and the second surface 2b. Therefore, the anode 2 is less likely to be distorted during charging and discharging, and damage is suppressed, so that improvement in cycle characteristics can be expected.

Moreover, when the metal constituting the base material is aluminum, the Vickers hardness of a base material layer 25 is preferably 10 HV or greater and 100 HV or less. The Vickers hardness of the base material layer 25 is preferably 10 HV or greater and 70 HV or less, more preferably 20 HV or greater and 70 HV or less, and still more preferably 30 HV or greater and 70 HV or less.

The Vickers hardness can be measured by the method described above (Method for Measuring Vickers Hardness).

If the Vickers hardness is the upper limit value or less, it is presumed that a strain of a crystal structure of the base material when lithium is absorbed can be relaxed, and the crystal structure can be thus maintained. Therefore, the anode 2 can maintain a discharge capacity even when the anode 2 is used in the lithium secondary cell and repeatedly charged and discharged.

In addition, the base material layer 25 preferably has an average corrosion rate of 0.2 mm/year or less as measured by the method described above (Method for Measuring Average Corrosion Rate).

In addition, in a cumulative frequency distribution curve (cumulative frequency distribution curve 1) of an absolute value of an angle, which is formed by a rolled surface of the base material layer and a normal line of a {111} plane as measured in the method described above (Method for Measuring Crystal Orientation of Base Material), the base material layer 25 preferably has an angle, at which a cumulative frequency from a low angle side becomes 50% or greater, of 20° or less when the total is 100%.

The Vickers hardness and the cumulative frequency of crystal orientation described above can be measured on the surface of the anode 2 if only a base material portion (base material layer) remains on the surface of the anode 2. When the base material portion does not remain on the surface of the anode 2, the Vickers hardness and the cumulative frequency of crystal orientation described above can be measured in the base material layer 25 exposed to the cross section by cutting the anode 2 in the thickness direction.

<<Production Method for Metal Anode>>

The anode 2 can be produced by producing an anode body by the method described in <<Production Method for Metal Anode>> above in the first embodiment, and charging the obtained anode body. Hereinafter, a case where the base material of the anode 2 is high-purity aluminum will be described by way of example.

(Step of Charging)

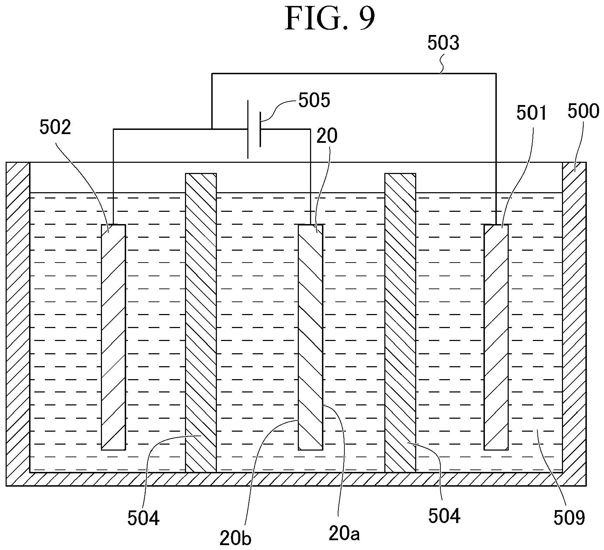

FIG. 9 is a schematic view showing the production method of the anode 2. As shown in FIG. 9, the electrolytic solution (electrolyte) 509 is stored in the container 500. An anode body 20, the first cathode 501, and a second cathode 502 are immersed in the electrolytic solution 509. A first surface 20a of the anode body 20 faces the first cathode 501, and a second surface 20b faces the second cathode 502. Accordingly, the electrolyte is disposed between the anode body 20 and the first cathode 501 and between the anode body 20 and the second cathode 502. As the first cathode 501 and the second cathode 502, known cathodes for a lithium secondary cell can be used.

The separator 504 may be disposed between the anode body 20 and the first cathode 501 and between the anode body 20 and the second cathode 502. As the separator 504, a known separator can be used.

Next, the anode body 20 and the first cathode 501 and the anode body 10 and the second cathode 502 are connected by the wiring 503, and the anode body 20 is charged from the power supply 505.

Charging is performed with a constant current to the anode body 20. In this case, a charging current density for the anode body 20 is controlled to 0.6 mA/cm$^2$ or greater and 30 mA/cm$^2$ or less. The charging current density may be 0.8 mA/cm$^2$ or greater, 1 mA/cm$^2$ or greater, or 3 mA/cm$^2$ or greater. In addition, the charging current density may be 15 mA/cm$^2$ or less or 10 mA/cm$^2$ or less. The upper limit value and lower limit value of the charging current density can be randomly combined together.

Moreover, charging can be performed on the anode body 20 at a constant voltage. In this case, the charging current density for the anode body 10 is controlled to 0.6 mA/cm$^2$ or greater. The charging current density may be 0.8 mA/cm$^2$ or greater, 1 mA/cm$^2$ or greater, or 3 mA/cm$^2$ or greater. In addition, the charging current density may be 15 mA/cm$^2$ or less or 10 mA/cm$^2$ or less. The upper limit value and lower limit value of the charging current density can be randomly combined together.

As a result, the lithium ions in the electrolytic solution 509 move in the same manner as described with reference to FIG. 6, and enter the anode body 20 from each of the first surface 20a and the second surface 20b. In the anode body 20, as described above, it is difficult for a location where lithium ions enter deeply and a location where lithium ions enter only shallowly to be generated. Therefore, it is considered that an anode can be obtained in which the standard deviation of length from the interface 2x to the interface 2y satisfies 0 or greater and 10 or less.

According to the metal anode 2 configured as described above, a metal anode having good cycle characteristics can be obtained without using a cladding material.

Even in the metal anode of the present embodiment, as in the first embodiment, a lithium secondary cell, which will be described below, may be assembled using the anode body in place of the anode, and a metal anode may be produced within the cell by charging the lithium secondary cell during initial charge while controlling the charging current density to 0.6 mA/cm$^2$ or greater and 30 mA/cm$^2$ or less at a constant current.

[Third Embodiment]

<<Lithium Secondary Cell>>

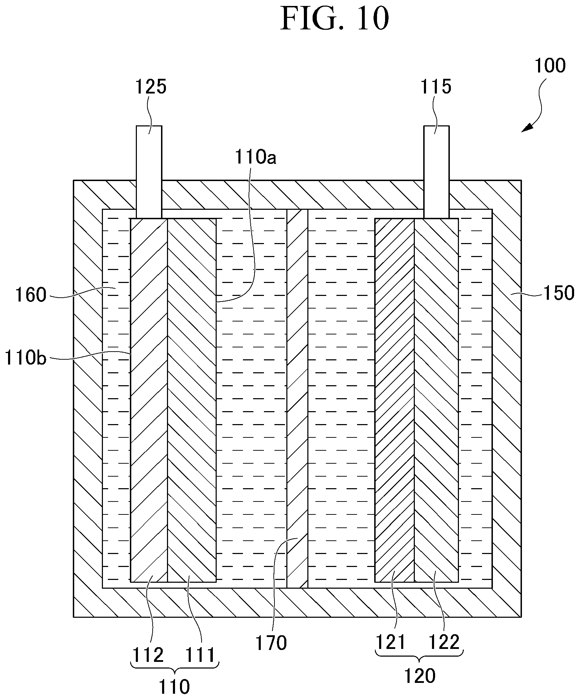

Fig. 10 is a schematic view showing an example of a lithium secondary cell according to the present embodiment. A lithium secondary cell 100 includes a metal anode 110 capable of absorbing and releasing lithium ions, a cathode 120 capable of absorbing and releasing the lithium ions, and an electrolytic solution 160 disposed between the metal anode 110 and the cathode 120.

Further, the lithium secondary cell 100 includes a separator 170 preventing physical contact between the cathode 120 and the metal anode 110, and a cell exterior 150 housing the cathode 120, the metal anode 110, the electrolytic solution 160, and the separator 170.

Hereinafter, each component will be described in this order.

As the metal anode 110, the anode 1 of the first embodiment can be used. The metal anode 110 has an active layer 111 and a base material layer 112. The active layer 111 and the base material layer 112 are formed continuously and integrally. The active layer 111 has a first surface 110a and the base material layer 112 has a second surface 110b.

The first surface 110a faces the cathode 120.

A lead wire 125 is connected to the base material layer 112 and drawn out of the cell exterior 150.

(Cathode)

The cathode 120 has a cathode active material layer 121 and a cathode current collector 122. A lead wire 115 is connected to the cathode current collector 122 and drawn out of the cell exterior 150.

The cathode 120 can be produced by, first, adjusting a cathode mixture containing a cathode active material, a conductive material, and a binder and supporting the cathode mixture by the cathode current collector 122 to form the cathode active material layer 121.

(Cathode Active Material)

As the cathode active material contained in the cathode active material layer 121, a lithium-containing compound or another metal compound can be used. Examples of the lithium-containing compound include a lithium cobalt composite oxide having a layered structure, a lithium nickel composite oxide having a layered structure, and a lithium manganese composite oxide having a spinel structure.

Further, examples of another metal compound include oxides such as titanium oxide, vanadium oxide, or manganese dioxide, and sulfides such as titanium sulfide or molybdenum sulfide.

(Conductive Material)

As the conductive material, a carbon material can be used. As the carbon material, graphite powder, carbon black (for example, acetylene black), a fibrous carbon material, and the like are exemplary examples. Carbon black is fine and has a large surface area. Therefore, conductivity inside the cathode can be enhanced by adding a small amount of the conductive material to the cathode mixture, and a charge/discharge efficiency and output characteristics can be improved. On the other hand, when an excess of carbon black is added, both the binding force between the cathode mixture and the cathode current collector 122 attributed to the binder and the binding force inside the cathode mixture deteriorate, which, conversely, causes an increase in the internal resistance.

The fraction of the conductive material in the cathode mixture is preferably 5 parts by mass or greater and 20 parts by mass or less with respect to 100 parts by mass of the cathode active material. In the case of using a fibrous carbon material such as a graphitized carbon fiber or a carbon nanotube as the conductive material, it is also possible to decrease the fraction of the conductive material in the cathode mixture.

(Binder)

As the binder, a thermoplastic resin can be used. As the thermoplastic resin, fluororesins such as polyvinylidene fluoride (hereinafter, referred to as PVdF in some cases), polytetrafluoroethylene (hereinafter, referred to as PTFE in some cases), tetrafluoroethylene-hexafluoropropylene-vinylidene fluoride-based copolymers, hexafluoropropylene-vinylidene fluoride-based copolymers, and tetrafluoroethylene-perfluorovinyl ether-based copolymers; and polyolefin resins such as polyethylene and polypropylene are exemplary examples.

Two or more of these thermoplastic resins may be used in a mixture form. When a fluororesin and a polyolefin resin are used as the binder, the fraction of the fluororesin in the entire cathode mixture is set to 1% by mass or greater and 10% by mass or less, and the fraction of the polyolefin resin is set to 0.1% by mass or greater and 2% by mass or less, it is possible to obtain a cathode mixture having both a high adhesive force to the cathode current collector 122 and a high bonding force in the cathode mixture.

(Cathode Current Collector)

As the cathode current collector 122, a band-shaped member formed of a metallic material such as Al, Ni, or stainless steel can be used. Particularly, as the current collector, a molded body formed of Al and having a thin film shape is preferable since it is easy to process and inexpensive.

As the method for supporting the cathode mixture by the cathode current collector 122, a method in which the cathode mixture is formed by pressurization on the cathode current collector 122 is an exemplary example. In addition, the cathode mixture may be supported by the cathode current collector 122 by preparing a paste of the cathode mixture using an organic solvent, applying and drying the obtained paste of the cathode mixture on at least one surface side of the cathode current collector 122, and fixing the cathode mixture by pressing.

As the organic solvent that can be used in the case of preparing the paste of the cathode mixture, an amine-based solvent such as N,N-dimethylaminopropylamine or diethylenetriamine; an ether-based solvent such as tetrahydrofuran; a ketone-based solvent such as methyl ethyl ketone; an ester-based solvent such as methyl acetate; and an amide-based solvent such as dimethylacetamide or N-methyl-2-pyrrolidone are exemplary examples.

As the method for applying the paste of the cathode mixture to the cathode current collector 122, a slit die coating method, a screen coating method, a curtain coating method, a knife coating method, a gravure coating method, and an electrostatic spraying method are exemplary examples.

(Separator)

As the separator 170, a separator similar to the separator 504 described above can be used.

(Electrolytic Solution)

As the electrolytic solution 160, a solution similar to the electrolytic solution 509 described above can be used.

In addition, as a shape of the lithium secondary cell 100, a shape that is specified by IEC60086, which is a standard for cells specified by the International Electrotechnical Commission (IEC) or by JIS C 8500, can be adopted.

Shapes such as a cylindrical shape and a square shape are exemplary examples.

Moreover, the lithium secondary cell 100 is not limited to the configuration shown in Fig. 1, and a known configuration can be adopted. For example, the lithium secondary cell 100 may have a winding-type configuration in which a band-shaped separator, a band-shaped cathode, and a band-shaped metal anode are laminated in the order of the separator, the cathode, the separator, and the metal anode 110, and has a wound electrode group configured by housing in an exterior together with the electrolytic solution.

Furthermore, the lithium secondary cell 100 may have a lamination-type configuration in which the laminated structure of the cathode, the separator, the anode, and the separator is repeatedly overlaid. As the lamination-type lithium secondary cell, it is possible to exemplify a so-called coin-type cell, a button-type cell, and a paper-type (or sheet-type) cell.

According to the lithium secondary cell having such a configuration, the lithium secondary cell prevents damage to the metal anode and has excellent cycle characteristics without using the cladding material.

In the present embodiment, the anode 1 of the first embodiment can be used as the metal anode 110, but the anode 2 of the second embodiment can also be used.

In the lithium secondary cell using the anode 2, a cathode active material layer of a first cathode may face the first surface of the anode 2 via the separator, and a cathode active material layer of a second cathode may face the second surface of the anode 2 via the separator.

[Fourth Embodiment]

[Battery System]

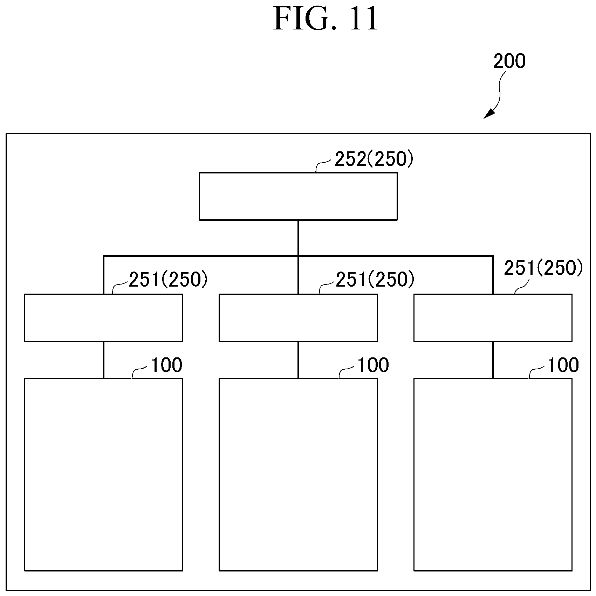

FIG. 11 is a schematic view showing a battery system according to a fourth embodiment.

A battery system 200 of the present embodiment includes a lithium secondary cell unit 100 and a control unit 250 that controls charging and discharging of the lithium secondary cell unit 100. Hereinafter, the lithium secondary cell unit 100 may be abbreviated as a "cell unit 100".

As the cell unit 100, the lithium secondary cell 100 in the above-described embodiment can be adopted. The lithium secondary cell 100 may use the anode 1 of the first embodiment or the anode 2 of the second embodiment as the anode 2. Hereinafter, as an example of the battery system, a configuration will be described in which the cathode of the cell unit 100 contains $LiCoO_2$ as the cathode active material and a base material of the anode (metal anode) is aluminum.

The battery system 200 shown in FIG. 11 includes three cell units 100. The number of cell units 100 included in the battery system 200 can be appropriately determined according to the design.

The control unit 250 includes a cell management unit (CMU) 251 connected to the cell unit 100 in a one-to-one relationship, and one battery management unit (BMU) 252 connected to the CMU 251.

The CMU 251 is connected to the cell unit 100 via a signal line. The CMU 251 receives, as a signal, a current measured by a current sensor (not shown) provided at a terminal portion of the cell unit 100, for example. The CMU 251 then outputs a signal related to the current to the BMU 252.

The BMU 252 controls the charging current density of the metal anode of the cell unit 100 at a constant current to 0.6 mA/cm$^2$ or greater based on the signal regarding the current of the cell unit 100. In addition, the BMU 252 controls the charging current density of the cell unit 100 at a constant current to 30 mA/cm$^2$ or less. As a result, the control unit 250 controls the charging current density of the cell unit 100 at a constant current within a range of 0.6 mA/cm$^2$ or greater and 30 mA/cm$^2$ or less.

The control unit 250 may control the charging current density of the cell unit 100 at a constant current to 0.8 mA/cm$^2$ or greater, 1 mA/cm$^2$ or greater, or 3 mA/cm$^2$ or greater. In addition, the control unit 250 may control the charging current density of the cell unit 100 at a constant current to 15 mA/cm$^2$ or less or 10 mA/cm$^2$ or less.

Furthermore, the control unit 250 may control the current density of the metal anode of the cell unit 100 during constant voltage charging to 0.6 mA/cm$^2$ or greater or 0.8 mA/cm$^2$ or greater.

According to the battery system having such a configuration, a battery system having good cycle characteristics can be obtained in which damage to the metal anode included in the lithium secondary cell unit is suppressed even in repeated charging and discharging.

In the present embodiment, as shown in FIG. 11, the CMU 251 is connected to each of the three cell units 100, and the BMU 252 is connected to the three CMUs 251, but the present invention is not limited thereto. For example, a plurality of cell units 100 may be connected to one CMU 251. Further, when the BMU 252 has a function of the CMU 251, the control unit 250 may be merely the BMU 252.

Moreover, the control unit 250 may include an electronic device or the like that is driven by electric power supplied from the cell unit 100. In this case, for example, the replaceable cell unit 100 and the control unit 250 may be separated from each other, and the cell unit 100 is connected to the electronic device, so that the electronic device serves as a device including the battery system 200 of the present embodiment.

Although the preferred embodiments of the present invention have been described above with reference to the accompanying drawings, the present invention is not limited to these examples. The shapes, combinations, and the like of each of the essential elements shown in the examples described above are examples, and can be variously changed based on the design or specification within a range that does not deviate from the scope of the present invention.

The present invention includes the following aspects.

[1-1] A metal anode, including: an active layer formed of lithium and a base material in which the lithium is solid-dissolved; and a base material layer formed of the base material, in which the metal anode has a plate shape including a first surface and a second surface facing each other, the active layer is present on a side of the first surface, the base material layer is present on a side of the second surface, the active layer and the base material layer are laminated in contact with each other, the base material includes one or more metals selected from the group consisting of Al, Si, Sn, and Pb, and the base material layer has a standard deviation of 0 or greater and 10 or less, which is obtained by the following method, for a length from the second surface to the active layer.

(Method for Calculating Standard Deviation)

A cross section of the anode is produced under an environment managed at a moisture value of 1 ppm or less. A scanning electron microscope image including the first surface and the second surface, which has magnification of x600, is obtained from the cross section.

In the scanning electron microscope image, a reference line connecting a first intersection point between the second surface and an outer frame of the scanning electron microscope image and a second intersection point between the second surface and the outer frame is set.

On the reference line, a plurality of reference points are set at intervals of 15 $\mu$m in actual size between the first intersection point and the second intersection point. A perpendicular line is extended from each reference point to set an intersection point between the perpendicular line and an interface between the active layer and the base material layer. A length is obtained for a line segment connecting each reference point and the intersection point.

The same operation is performed on each of scanning electron microscope images of five fields of view, and a standard deviation is obtained for measurement values of a plurality of obtained line segments.

[2-1] A metal anode, including: a first active layer formed of lithium and a base material in which the lithium is solid-dissolved; a second active layer formed of the lithium and the base material; and a base material layer formed of the base material, in which the metal anode has a plate shape including a first surface and a second surface facing each other, the first active layer is present on a side of the first surface, the second active layer is present on a side of the second surface, the base material layer is located between the first active layer and the second active layer, the first active layer and the base material layer are laminated in contact with each other, the second active layer and the base material layer are laminated in contact with each other, the base material includes one or more metals selected from the group consisting of Al, Si, Sn, and Pb, and the base material layer has a standard deviation of 0 or greater and 10 or less, which is obtained by the following method, for a length from an interface between the first active layer and the base material layer to an interface between the second active layer and the base material layer.

(Method for Calculating Standard Deviation)

First, a cross section of the anode is produced under an environment managed at a moisture value of 1 ppm or less. A scanning electron microscope image including the first surface and the second surface, which has magnification of x600, is obtained from the cross section.

In the scanning electron microscope image, a first reference line connecting a first intersection point between the second surface and an outer frame of the scanning electron microscope image and a second intersection point between the second surface and the outer frame is set.

On the first reference line, a plurality of reference points are set at intervals of 15 $\mu$m in actual size between the first intersection point and the second intersection point. A first perpendicular line is extended from each reference point on the first reference line to set an intersection point between the first perpendicular line and an interface between the second active layer and the base material layer and an intersection point between the first perpendicular line and an interface between the first active layer and the base material layer. A length is obtained for a line segment connecting two intersection points set on each first perpendicular line.

The same operation is performed on each of scanning electron microscope images of five fields of view, and a first standard deviation is obtained for measurement values of a plurality of line segments obtained from the first perpendicular line.

Similarly, in the scanning electron microscope image, a second reference line connecting a third intersection point between the first surface and the outer frame and a fourth intersection point between the first surface and the outer frame is set.

On the second reference line, a plurality of reference points are set at intervals corresponding to 15 $\mu$m in actual size between the third intersection point and the fourth intersection point. A second perpendicular line is extended from each reference point on the second reference line to set an intersection point between the second perpendicular line and an interface between the first active layer and the base material layer and an intersection point between the second perpendicular line and an interface between the second active layer and the base material layer. A length is obtained for a line segment connecting two intersection points set on each second perpendicular line.

The same operation is performed on each of scanning electron microscope images of five fields of view, and a second standard deviation is obtained for measurement values of a plurality of line segments obtained from the second perpendicular line.

An arithmetic average value of the first standard deviation and the second standard deviation is defined as a standard deviation.

[Examples]

Hereinafter, the present invention will be described with reference to Examples, but the present invention is not limited to these Examples. In the following description, the above-described reference signs are used as appropriate.

In the present Example, measurements were performed as appropriate.

(Vickers Hardness)

The Vickers hardness was measured according to the description in (Method for Measuring Vickers Hardness).

(Average Corrosion Rate)

The average corrosion rate of the anode was measured according to the description in (Method for Measuring Average Corrosion Rate).

(Crystal Orientation of Base Material)

The crystal orientation of the base material was measured according to the description in (Method for Measuring Crystal Orientation of Base Material).

<Example 1>

[Preparation of Anode 1]

An aluminum metal foil used in Example 1 was manufactured by the following method. In the following description, the aluminum metal foil may be abbreviated as a "metal foil".

(Casting Step)

4,600 g of aluminum (purity: 99.99% by mass or greater) was weighed. Aluminum was produced according to the above description (three-layer electrolysis method). The purity of aluminum was calculated using an ICP optical emission spectrometer (SPS3000, manufactured by SIINanoTechnology Inc.).

Next, molten aluminum was obtained by melting aluminum

Next, the molten aluminum was kept and purified under conditions of a temperature of 740°C for 2 hours and a vacuum degree of 50 Pa.

The molten aluminum was cast using a casting mold of cast iron (22 mm $\times$ 150 mm $\times$ 200 mm) dried at 150°C to obtain an ingot.

In order to homogenize a crystal structure of the obtained ingot, heat treatment was performed in air at 580°C for 9 hours.

(Foil Shape Processing Step)

Rolling was performed under the following conditions. After both sides of the ingot were chamfered by 2 mm, cold rolling was performed from a thickness of 18 mm at the processing rate r of 99.6%. No heat treatment was performed after cold rolling. The thickness of the obtained metal foil was 50 $\mu$m. Aluminum having a purity of 99.99% by mass or greater constituting the metal foil corresponded to the base material in the present invention.

The obtained aluminum metal foil (thickness: 50 μm) was cut into a disk shape of φ16 mm to produce an anode.

[Preparation of Cathode 1]

90 parts by mass of lithium cobalt oxide (product name: CELLSEED, manufactured by Nippon Chemical Industrial CO., LTD., average particle size (D50): 10 μm) as a cathode active material, 5 parts by mass of polyvinylidene fluoride (manufactured by Kureha Corporation) as a binder, and 5 parts by mass of acetylene black (product name: Denka Black, manufactured by Denka Company Limited) as a conductive material were mixed, and 70 parts by mass of N-methyl-2-pyrrolidone was further mixed with the mixture to prepare an electrode mixture for the cathode.

The obtained electrode mixture was coated onto aluminum foil, which is a current collector, having a thickness of 15 μm by a doctor blade method. The coated electrode mixture was dried at 60°C for 2 hours and vacuum-dried at 150°C for 10 hours to volatilize N-methyl-2-pyrrolidone. A coating amount of the cathode active material after drying was 12.0 mg/cm$^2$.

After a laminate of the obtained electrode mixture layer and the current collector was rolled, the laminate was cut into a disk shape of φ14 mm to produce a cathode 1, which is a laminate of a cathode mixture layer, as a material for forming lithium cobalt oxide, and the current collector.

The thickness of a cathode mixed material layer excluding the current collector from the laminate after rolling was within a range of 35 to 37 μm. In addition, the electrode density of the cathode mixture layer was within a range of 3.0 to 3.5 g/cm$^3$.

[Preparation of Electrolytic Solution]

An electrolytic solution obtained by dissolving LiPF$_6$ in a mixed solvent obtained by mixing ethylene carbonate (EC) and diethyl carbonate (DEC) in EC:DEC = 30:70 (volume ratio) to be 1 mol/L was prepared.

<Preparation of Lithium Secondary Cell>

A polyethylene porous separator was disposed between the anode and the cathode 1 described above and stored in a battery case (standard 2032), the electrolytic solution was injected thereinto to seal the cell case, thereby preparing a coin-type (full cell) lithium secondary cell having a diameter of 20 mm and a thickness of 3.2 mm.

[Charge/discharge Treatment]

The coin-type lithium secondary cell was allowed to stand at room temperature (25°C) for 10 hours to sufficiently impregnate the separator and the cathode mixture layer with the electrolytic solution.

Next, constant current charging (Li absorption into Al) was performed at a charging current density of 0.75 mA/cm$^2$ up to 4.2 V at room temperature. As a result, in the lithium secondary cell, lithium entered the anode made of aluminum metal to produce a metal anode of the present invention.

Next, initial charging/discharging was performed by performing constant current discharging (Li release from Al) at a current density of 0.75 mA up to 3.0 V

The charging/discharging described above was defined as one cycle, and the charging/discharging of a total of 21 cycles was repeated under the same conditions. After charging/discharging, the lithium secondary cell was disassembled and the anode was removed.

When the surface of the removed anode was observed, a surface (front surface) of a side of the cathode of the anode changed color to black. In the anode, it is considered that lithium ions entered the anode from the front surface facing the cathode, and that an interstitial solid solution layer where lithium entered between atoms of the base material (aluminum) was formed. As a result, it was believed that the front surface was turned black.

That is, the front surface of the removed anode corresponds to the first surface in the present invention. A certain range in the thickness direction from a front surface side corresponds to the active layer in the present invention.

On the other hand, a surface (back surface) of the anode opposite to the cathode had a metallic luster of aluminum on the entire surface. Moreover, there were no scratches on the back surface.

If some of the lithium ions entering from the front surface of the anode reach the back surface, the resulting active layer reaches the back surface. In this case, when there are both a portion where lithium ions reach the back surface and a portion where lithium ions do not reach the back surface, it is expected on the back surface that there are both a portion having metallic luster of aluminum, which is the base material, and a portion turned black like the front surface, so that it is believed that the surface is not smooth.

Therefore, as described above, when the back surface has a metallic luster and there are no scratches on the back surface, it can be determined that the active layer has not reached the back surface and the base material is maintained.

That is, the back surface of the removed anode corresponds to the second surface in the present invention. A range from a back surface side to the active layer corresponds to the base material layer in the present invention.

The removed anode was cut in the thickness direction (direction intersecting the front surface and the back surface) of the anode to form a cross section. As for the base material layer exposed to the cross section, a standard deviation of length from the back surface to the active layer was obtained according to the description in (Method for Calculating Standard Deviation of Length La).

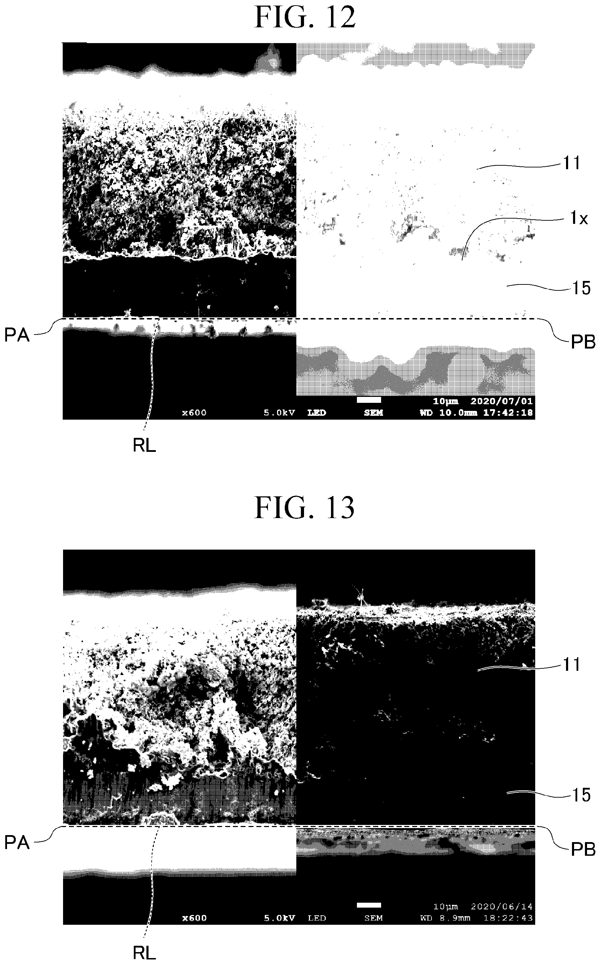

FIG. 12 is an electromicroscopic photograph showing a cross section of an anode in Example 1. As shown in FIG. 12, in the SEM photograph, a difference between the active layer 11 and the base material layer 15 is clear, and the interface 1x is also clear. As described above, a virtual line connecting the intersection points PA and PB between the surface (second surface) on a side of the base material layer of the anode and the outer frame of the SEM photograph is defined as a reference line RL. As a result of calculating the standard deviation by obtaining the length from the reference line RL to the interface 1x according to the method, the standard deviation was 6.

<Example 2>

A lithium secondary cell was prepared as in Example 1 except that the charging current density was 1.5 mA/cm$^2$, and 21 cycles of charging/discharging were repeated.

After charging/discharging, the lithium secondary cell was disassembled and the anode was removed. When the surface of the removed anode was observed, a front surface of the anode changed color to black. On the other hand, a back surface of the anode had a metallic luster of aluminum on the entire surface. Moreover, there were no scratches on the back surface.

A cross section of the anode was formed in the same manner as in Example 1, and a standard deviation of length from the back surface to the active layer was obtained. FIG. 13 is an electromicroscopic photograph showing a cross section of an anode in Example 2. In FIG. 13, a reference line RL connecting the intersection points PA and PB between the surface (second surface) on the base material layer side of the anode and the outer frame of the SEM photograph is set, and a standard deviation was calculated by obtaining a length from the reference line RL to the interface, and as a result, the standard deviation was 2.

<Comparative Example 1>

A lithium secondary cell was prepared in the same manner as in Example 1, except that the charging current density was 0.5 mA/cm$^2$, and 21 cycles of charging/discharging were repeated.

After charging/discharging, the lithium secondary cell was disassembled and the anode was removed. When the surface of the removed anode was observed, the surface changed color to black. On the other hand, the back surface of the anode had a metallic luster of aluminum, but was raised in a spot shape throughout the entire surface.

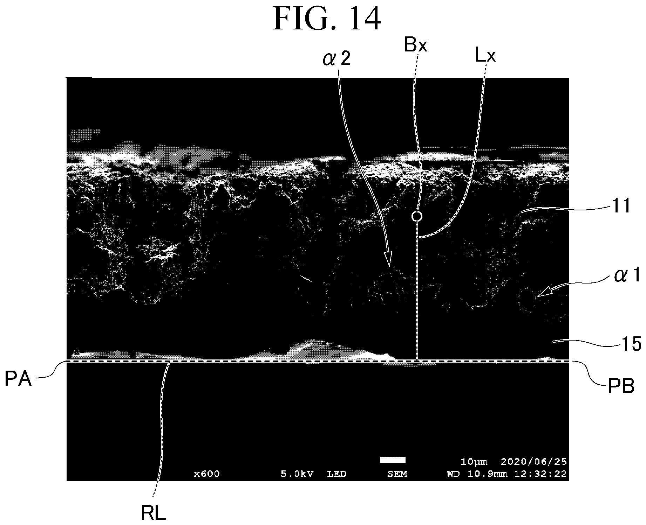

A cross section of the anode was formed in the same manner as in Example 1, and a standard deviation of length from the back surface to the active layer was obtained. FIG. 14 is an electromicroscopic photograph showing a cross section of an anode in Comparative Example 1. In FIG. 14, a reference line RL connecting the intersection points PA and PB between the surface (second surface) on the base material layer side of the anode and the outer frame of the SEM photograph is set, and a length from the reference line RL to the interface was obtained.

In the base material layer 15 shown in FIG. 14, for example, a void was formed at a portion indicated by reference sign α1. In addition, the base material layer 15 was discontinuous due to the void at a portion indicated by reference sign α2. In such a portion, when the perpendicular line extending from the reference point of the reference line RL overlapped the void in the base material layer 15, the "intersection point that was farthest from the reference line RL" from the "reference point on the reference line RL" was defined as an intersection point between the active layer and the interface. In FIG. 14, in a case of the line segment Lx shown as an example, an obtained intersection point Bx was not defined as an intersection point with the void in the base material layer 15, and was defined as an intersection point that is farthest from the reference line RL.

As a result of calculating a standard deviation for a length of the line segment obtained as described above, the standard deviation was 15.

<Example 3>

4,500 g of high-purity aluminum (purity: 99.99% by mass or greater) and 45 g of high-purity chemical silicon (purity: 99.999% by mass or greater) were mixed, and the mixture was heated to 760°C and held at 760°C to obtain a molten Al-Si alloy having silicon contained in an amount of 1.0% by mass.

A metal foil of Example 3 was obtained in the same manner as in Example 1, except that the above molten Al-Si alloy was used instead of the molten aluminum. The thickness of the obtained metal foil was 50 $\mu$m. The Al-Si alloy constituting the metal foil corresponds to the base material in the present invention.

A lithium secondary cell was prepared in the same manner as in Example 1, except that the metal foil of Example 3 was used instead of an aluminum metal foil, and 21 cycles of charging/discharging were repeated.

After charging/discharging, the lithium secondary cell was disassembled and the anode was removed. When the surface of the removed anode was observed, the surface changed color to black. On the other hand, a back surface of the anode had a metallic luster on the entire surface. Moreover, there were no scratches on the back surface.

A cross section of the anode was formed in the same manner as in Example 1, and a standard deviation of length from the back surface to the active layer was obtained.

<Example 4>

A lithium secondary cell was prepared in the same manner as in Example 3, except that the current density was 1.5 mA/cm$^2$, and 21 cycles of charging/discharging were repeated.

After charging/discharging, the lithium secondary cell was disassembled and the anode was removed. When the surface of the removed anode was observed, the surface changed color to black. On the other hand, a back surface of the anode had a metallic luster on the entire surface. Moreover, there were no scratches on the back surface.

A cross section of the anode was formed in the same manner as in Example 3, and a standard deviation of length from the back surface to the active layer was obtained.

<Comparative Example 2>

A lithium secondary cell was prepared in the same manner as in Example 3, except that the charging current density was 0.5 mA/cm$^2$, and 21 cycles of charging/discharging were repeated.

After charging/discharging, the lithium secondary cell was disassembled and the anode was removed. When the surface of the removed anode was observed, the surface changed color to black. On the other hand, the back surface of the anode had a metallic luster of aluminum, but was raised in a spot shape throughout the entire surface.

A cross section of the anode was formed in the same manner as in Example 3, and a standard deviation of length from the back surface to the active layer was obtained.

From the above results, it was confirmed that a metal anode having a standard deviation of length, which is from the back surface to the active layer, of 0 or greater and 10 or less can be easily produced according to the production method for a metal anode of the present invention.

«Cycle Test»

A cycle test of the lithium secondary cell was performed as follows.

<Example 5>

[Preparation of Cathode 2]

A laminate of an electrode mixture layer and a current collector was prepared in the same manner as [Preparation of Cathode 1] in Example 1, except that a gap was adjusted using the doctor blade. In the laminate, a coating amount of the cathode active material after drying was 21.5 mg/cm$^2$.

After a laminate of the obtained electrode mixture layer and the current collector was rolled, the laminate was cut into a disk shape of $\varphi$14 mm to produce a cathode 2, which is a laminate of a cathode mixture layer, as a material for forming lithium cobalt oxide, and the current collector.

The thickness of a cathode mixed material layer excluding the current collector from the laminate after rolling was 60 to 75 $\mu$m, and an electrode density thereof was 3.0 to 3.5 g/cm$^3$.

A coin-type lithium secondary cell was prepared in the same manner as in Example 3, except that the cathode 2 was used instead of the cathode 1. The obtained coin-type lithium secondary cell was allowed to stand at room temperature for 10 hours to sufficiently impregnate the separator and the cathode mixture layer with the electrolytic solution.

Next, the lithium secondary cell was subjected to constant current charging at room temperature up to 4.2 V at 0.6 mA/cm$^2$ for 1 hour, and then was subjected to constant current-constant voltage charging at 4.2 V until the current reached 0.2 mA/cm$^2$. Further, constant current discharging was performed on the lithium secondary cell at 0.65 mA up to 3.0 V, and initial charging/discharging (first charging/discharging) was performed.

A cycle test was performed to confirm changes in discharge capacity by repeating a total of 100 cycles of charging/discharging under the same conditions, with one cycle of charging/discharging.

A ratio of the discharge capacity at the 10th cycle to the discharge capacity at the second cycle is defined as a discharge capacity retention rate (%) at the 10th cycle, and the discharge capacity retention rate (%) calculated at the 10th cycle was 93.4%.

<Example 6>

A lithium secondary cell was prepared in the same manner as in Example 5. 100 cycles of charging/discharging were repeated in the same manner as in Example 5, except that the charging current density during constant current charging was changed from 0.6 mA/cm$^2$ to 0.9 mA/cm$^2$.

The discharge capacity retention rate (%) calculated at the 10th cycle was 95.6%.

<Example 7>

A lithium secondary cell was prepared in the same manner as in Example 5. 100 cycles of charging/discharging were repeated in the same manner as in Example 5, except that the charging current density during constant current charging was changed from 0.6 mA/cm$^2$ to 1.5 mA/cm$^2$.

The discharge capacity retention rate (%) calculated at the 10th cycle was 95.0%.

<Comparative Example 3>

A lithium secondary cell was prepared in the same manner as in Example 5. 100 cycles of charging/discharging were repeated in the same manner as in Example 5, except that the charging current density during constant current charging was changed from 0.6 mA/cm$^2$ to 0.3 mA/cm$^2$.

The discharge capacity retention rate (%) calculated at the 10th cycle was 86.6%.

<Example 8>

A cycle test was performed by repeating 100 cycles of charging/discharging in the same manner as in Example 5, except that discharging was performed at 0.65 mA up to 3.4 V, instead of discharging at 0.65 mA up to 3.0 V during constant current discharging.

The discharge capacity retention rate (%) calculated at the 10th cycle was 91.9%.

<Example 9>

A cycle test was performed by repeating 100 cycles of charging/discharging in the same manner as in Example 6, except that discharging was performed at 0.65 mA up to 3.4 V, instead of discharging at 0.65 mA up to 3.0 V during constant current discharging.

The discharge capacity retention rate (%) calculated at the 10th cycle was 95.0%.

<Example 10>

A cycle test was performed by repeating 100 cycles of charging/discharging in the same manner as in Example 7, except that discharging was performed at 0.65 mA up to 3.4 V, instead of discharging at 0.65 mA up to 3.0 V during constant current discharging.

The discharge capacity retention rate (%) calculated at the 10th cycle was 97.0%.

<Comparative Example 4>

A cycle test was performed by repeating 100 cycles of charging/discharging in the same manner as in Comparative Example 3, except that discharging was performed at 0.65 mA up to 3.4 V, instead of discharging at 0.65 mA up to 3.0 V during constant current discharging.

The discharge capacity retention rate (%) calculated at the 10th cycle was 89.0%.

Table 1 shows the cycle test results of Examples 5 to 7 and Comparative Example 3. Table 2 shows the cycle test results of Examples 8 to 10 and Comparative Example 4. The evaluation column shows evaluation results based on the following criteria. Evaluation A was determined as good, and Evaluation B was determined as poor.

EP 4 257 714 A1

A: Discharge capacity retention rate at 10th cycle was 90% or greater
B: Discharge capacity retention rate at 10th cycle was less than 90%

[Table 1]

|  | Charging current density (mA/cm$^2$) | Discharge capacity retention rate (%) (10th cycle) | Evaluation |
|---|---|---|---|
| Example 5 | 0.6 | 93.4 | A |
| Example 6 | 0.9 | 95.6 | A |
| Example 7 | 1.2 | 95.0 | A |
| Comparative Example 3 | 0.3 | 86.6 | B |

[Table 2]

|  | Charging current density (mA/cm$^2$) | Discharge capacity retention rate (%) (10th cycle) | Evaluation |
|---|---|---|---|
| Example 8 | 0.6 | 91.9 | A |
| Example 9 | 0.9 | 95.0 | A |
| Example 10 | 1.2 | 97.0 | A |
| Comparative Example 4 | 0.3 | 89.0 | B |

From the above results, it was confirmed that a metal anode produced by the production method of a metal anode of the present invention, that is, a metal anode having a standard deviation of length, which is from the back surface to the active layer, of 0 or greater and 10 or less has good cycle characteristics.

Moreover, it was found that the discharge capacity retention rate was excellent in the cycle test by charging a lithium secondary cell having the metal anode of the present invention at a charging current density of 0.6 mA/cm$^2$ or greater.

From the above results, it was confirmed that the present invention is useful.

[Reference Signs List]

1, 2, 110: Metal anode
1a, 2a, 10a, 20a, 110a: First surface
1b, 2b, 10b, 20b, 110b: Second surface
1x, 2x, 2y, 10x: Interface
10, 10A, 10B, 20: Anode body
11, 11A, 111: Active layer
15, 15A, 25, 112: Base material layer
21: First active layer
22: Second active layer
100: Lithium secondary cell, Lithium secondary cell unit
120: Cathode
200: Battery system
250: Control unit
L1, L2: Length

**Claims**

1.  A metal anode, comprising:

    an active layer formed of lithium and a base material in which the lithium is solid-dissolved; and
    a base material layer formed of the base material,
    wherein the metal anode has a plate shape including a first surface and a second surface facing each other,
    the active layer is present on a side of the first surface,
    the base material layer is present on a side of the second surface,
    the active layer and the base material layer are laminated in contact with each other,
    the base material includes one or more metals selected from the group consisting of Al, Si, Sn, and Pb, and
    the base material layer has a standard deviation of length, which is from the second surface to the active layer, of 0 or greater and 10 or less.

2.  A metal anode, comprising:

    a first active layer formed of lithium and a base material in which the lithium is solid-dissolved;
    a second active layer formed of the lithium and the base material; and
    a base material layer formed of the base material,
    wherein the metal anode has a plate shape including a first surface and a second surface facing each other,
    the first active layer is present on a side of the first surface,
    the second active layer is present on a side of the second surface,
    the base material layer is located between the first active layer and the second active layer,
    the first active layer and the base material layer are laminated in contact with each other,
    the second active layer and the base material layer are laminated in contact with each other,
    the base material includes one or more metals selected from the group consisting of Al, Si, Sn, and Pb, and
    the base material layer has a standard deviation of length, which is from an interface between the first active layer and the base material layer to an interface between the second active layer and the base material layer, of 0 or greater and 10 or less.

3.  The metal anode according to Claim 1 or 2,
    wherein the base material is aluminum or an aluminum-containing metal.

4.  The metal anode according to Claim 3,
    wherein in the aluminum-containing metal, a non-aluminum metal phase is dispersed in an aluminum metal phase.

5.  The metal anode according to any one of Claims 1 to 4,
    wherein a Vickers hardness of the base material layer is 10 HV or greater and 70 HV or less.

6.  The metal anode according to any one of Claims 1 to 5,

    wherein the base material layer has an average corrosion rate of 0.2 mm/year or less as measured by an immersion test under the following immersion conditions,
    [Immersion Conditions]
    Immersion solution: 3.5% NaCl aqueous solution of which pH is adjusted to 3 using acetic acid as a pH-adjusting agent
    Immersion temperature: 30°C
    Immersion time: 72 hours.

7.  The metal anode according to any one of Claims 1 to 6,

    wherein the metal anode is formed of a rolled material, and
    in a cumulative frequency distribution curve of an absolute value of an angle that is formed by a rolled surface of the base material layer and a normal line of a {111} plane of a metal crystal included in the base material, which is obtained by measuring a surface of the base material layer by an electron backscattered diffraction method,
    an angle at which a cumulative frequency from a low angle side is 50% or greater is 20° or less when a total is 100%.

8. A lithium secondary cell, comprising:

   the metal anode according to any one of Claims 1 to 7, configured to absorb and release lithium ions;
   a cathode configured to absorb and release lithium ions; and
   an electrolyte disposed between the metal anode and the cathode.

9. A battery system, comprising:

   a lithium secondary cell unit; and
   a control unit,
   wherein the lithium secondary cell unit includes:

   the metal anode according to any one of Claims 1 to 7, configured to absorb and release lithium ions;
   a cathode configured to absorb and release lithium ions; and
   an electrolyte disposed between the metal anode and the cathode, and

   the control unit controls a charging current density of the metal anode at a constant current to 0.6 mA/cm$^2$ or greater and 30 mA/cm$^2$ or less.

10. The battery system according to Claim 9,
    wherein the control unit controls the charging current density to 0.6 mA/cm$^2$ or greater and 15 mA/cm$^2$ or less.

11. The battery system according to Claim 9 or 10,
    wherein the control unit controls a current density of the metal anode during constant voltage charging to 0.6 mA/cm$^2$ or greater.

12. A production method for a metal anode, comprising:

    charging an anode body at a constant current in a state where an electrolyte is disposed between the anode body and a cathode facing the anode body,
    wherein the anode body has a plate shape including a first surface and a second surface facing each other, in which the first surface faces the cathode, and includes one or more metals selected from the group consisting of Al, Si, Sn, and Pb, and
    in the charging, a charging current density of the anode body is controlled to 0.6 mA/cm$^2$ or greater and 30 mA/cm$^2$ or less.

13. A production method for a metal anode, comprising:

    charging an anode body at a constant current-constant voltage in a state where an electrolyte is disposed between the anode body and a cathode facing the anode body,
    wherein the anode body has a plate shape including a first surface and a second surface facing each other, in which the first surface faces the cathode, and includes one or more metals selected from the group consisting of Al, Si, Sn, and Pb, and
    in the charging, a current density of the anode body during constant voltage charging is controlled to 0.6 mA/cm$^2$ or greater.

# FIG. 1

# FIG. 2

# FIG. 3

# FIG. 4

# FIG. 5

10A

Li+

10a

11A

10x

15A

10b

# FIG. 6

10B

Li+

10a

11B

10x

15B

10b

# FIG. 7

# FIG. 8

# FIG. 9

# FIG. 10

# FIG. 11

# FIG. 12

PA

RL

11

1x

15

PB

x600    5.0kV  LED    SEM    10μm  2020/07/01
                              WD 10.0mm 17:42:18

# FIG. 13

PA

RL

11

15

PB

x600    5.0kV  LED    SEM    10μm  2020/06/14
                              WD 8.9mm  18:22:43

## FIG. 14

## INTERNATIONAL SEARCH REPORT

| International application No. |
| --- |
| **PCT/JP2021/044228** |

### A.   CLASSIFICATION OF SUBJECT MATTER

*C22C 11/06*(2006.01)i; *C22C 13/00*(2006.01)i; *C22C 21/00*(2006.01)i; *C22C 21/06*(2006.01)i; *C22F 1/00*(2006.01)i;
*C22F 1/04*(2006.01)i; *C22F 1/12*(2006.01)i; *C22F 1/16*(2006.01)i; *H01M 4/134*(2010.01)i; *H01M 4/38*(2006.01)i;
*H01M 4/46*(2006.01)i; *H01M 4/66*(2006.01)i; *H01M 10/052*(2010.01)i; *H01M 10/44*(2006.01)i
FI:   H01M4/134; H01M4/38 Z; H01M4/46; H01M10/44 A; H01M4/66 A; H01M10/052; C22C21/00 L; C22C21/00 N;
C22F1/04 K; C22C21/06; C22C11/06; C22C13/00; C22F1/00 606; C22F1/00 623; C22F1/00 627; C22F1/00 640A;
C22F1/00 630C; C22F1/00 661C; C22F1/00 681; C22F1/00 682; C22F1/00 683; C22F1/00 684B; C22F1/00 684C;
C22F1/00 685Z; C22F1/00 685A; C22F1/00 691B; C22F1/00 691C; C22F1/00 694A; C22F1/00 694B; C22F1/12;
C22F1/16 Z

According to International Patent Classification (IPC) or to both national classification and IPC

### B.   FIELDS SEARCHED

Minimum documentation searched (classification system followed by classification symbols)

C22C11/06; C22C13/00; C22C21/00; C22C21/06; C22F1/00; C22F1/04; C22F1/12; C22F1/16; H01M4/134; H01M4/38;
H01M4/46; H01M4/66; H01M10/052; H01M10/44

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C.   DOCUMENTS CONSIDERED TO BE RELEVANT

| Category* | Citation of document, with indication, where appropriate, of the relevant passages | Relevant to claim No. |
| --- | --- | --- |
| X | US 4996129 A (ALCAN INTERNATIONAL LTD.) 26 February 1991 (1991-02-26) column 2, line 37, column 3, line 10, column 3, lines 41-57, column 4, line 56 to column 6, line 44, fig. 3 | 1, 3-4, 7-13 |
| Y | | 2, 5-6 |
| Y | JP 61-208748 A (HITACHI MAXELL LTD.) 17 September 1986 (1986-09-17) page 2, upper left column, line 6 to page 2, lower right column, last line, fig. 3, 4 | 2 |
| Y | JP 2017-195028 A (HITACHI MAXELL LTD.) 26 October 2017 (2017-10-26) paragraphs [0002]-[0035] | 5 |

☑ Further documents are listed in the continuation of Box C.       ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **14 February 2022** | **22 February 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**

| International application No. |
|---|
| **PCT/JP2021/044228** |

**C.**     **DOCUMENTS CONSIDERED TO BE RELEVANT**

| Category* | Citation of document, with indication, where appropriate, of the relevant passages | Relevant to claim No. |
|---|---|---|
| Y | WO 2020/075616 A1 (SUMITOMO SEIKA CHEMICALS CO., LTD.) 16 April 2020 (2020-04-16)<br>    paragraphs [0005]-[0007] | 6 |
| A | EP 3633768 A2 (LG CHEM, LTD.) 08 April 2020 (2020-04-08) | 1-13 |

Form PCT/ISA/210 (second sheet) (January 2015)

INTERNATIONAL SEARCH REPORT
Information on patent family members

International application No.

**PCT/JP2021/044228**

| Patent document cited in search report | | | Publication date (day/month/year) | Patent family member(s) | | | Publication date (day/month/year) |
|---|---|---|---|---|---|---|---|
| US | 4996129 | A | 26 February 1991 | EP | 323888 | A2 | |
| | | | | page 2, line 57 to page 3, line 15, page 3, lines 32-41, page 4, line 1 to page 5, line 15, fig. 3 | | | |
| | | | | KR | 10-1989-0012407 | A | |
| | | | | JP | 1-211858 | A | |
| JP | 61-208748 | A | 17 September 1986 | (Family: none) | | | |
| JP | 2017-195028 | A | 26 October 2017 | (Family: none) | | | |
| WO | 2020/075616 | A1 | 16 April 2020 | CN | 112805854 | A | |
| | | | | paragraphs [0008]-[0036] | | | |
| | | | | KR | 10-2021-0062025 | A | |
| EP | 3633768 | A2 | 08 April 2020 | WO | 2019/045399 | A2 | |
| | | | | KR | 10-2019-0024761 | A | |
| | | | | CN | 110754009 | A | |
| | | | | JP | 2020-526893 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020200607 A
- JP 2017195028 A

**Non-patent literature cited in the description**

- *Light Metals,* 1987, vol. 37 (2), 146-152